# EUROPEAN PATENT APPLICATION

(11) **EP 1 080 970 A1**
(43) Date of publication of application: **07.03.2001**
(21) Application number: 99917097.0
(22) Date of filing: 21.04.1999
(51) Int. Cl.: B60K 5/12, F16F 15/08

(54) **VIBRATION-ISOLATION SUPPORTING STRUCTURE FOR ENGINE**

(30) Priority: 22.05.1998 JP 14196298
(71) Applicant: Yanmar Diesel Engine Co. Ltd., Osaka-shi, Osaka 530-0013 (JP)
(72) Inventor: KANDA, Hiroshi, Yanmar Diesel Engine Co., Ltd, Osaka 530-0013 (JP); OHKUBO, Minoru, Yanmar Diesel Engine Co., Ltd, Osaka 530-0013 (JP); SHIMIZU, Akihiko, Yanmar Diesel Engine Co., Ltd, Osaka 530-0013 (JP); UYAMA, Toshiyuki, Yanmar Diesel Engine Co., Ltd, Osaka 530-0013 (JP); KUBO, Takayuki, Yanmar Diesel Engine Co., Ltd, Osaka 530-0013 (JP); OZAWA, Shingo, Yanmar Diesel Engine Co., Ltd, Osaka 530-0013 (JP); OGAWA, Mitsugu, Yanmar Diesel Engine Co., Ltd, Osaka 530-0013 (JP)
(74) Representative: Henkel, Feiler, Hänzel
(86) International application number: JP9902137
(87) International publication number: WO9961273

(57) **Abstract**

A vibration-isolation supporting structure for engine, wherein recessed parts (1a) are formed in an engine (1), a vibration-isolation members (3) are installed beforehand in the recessed parts so that the members are enclosed by the recessed parts, and the vibration-isolation members (3) are installed onto a member to be installed (2) during an engine installation work and, for cylindrical vibration-isolation members (A), these members are supported by brackets (30), the brackets (30) and cylindrical vibration-isolation members (A) are installed on the engine (1) beforehand, and the brackets (30) are screwed vertically to the member to be installed (2), or the cylindrical vibration-isolation members (A) are installed on the side surface parts of the member to be installed (2) without providing the brackets (30).

## Description

### Field of the Invention

The present invention relates to a damper supporting structure for an engine which has dampers of an elastic material such as rubber used for mounting the engine to an anchor member (a frame or the like).

### Background of the Invention

Generally known is a technique of having each damper disposed between an engine and an anchor member, such as a chassis, as independent from the engine and the anchor member to absorb the vibrations from the engine and thus inhibit their transmission to the anchor member.

Also, in an engine having a crank shaft supported almost vertically, the piston travels back and forth on substantially a horizontal plane while the crank shaft is joined at its output end to an output pulley which is connected by a belt to an input pulley of an output device. Accordingly, the forward and backward movements of the piston on substantially the horizontal plane normal to the axis of the crank shaft will generate unwanted vibrations. On the horizontal plane, a strength of moment is developed by the belt being driven in one direction. For damping the vibrations on the engine with the use of dampers, it is necessary to increase the spring constant along the driving direction of the belt in order to improve the durability of the dampers. For supporting the engine with dampers, an arrangement is conventionally known comprising a small-diameter cylindrical member and a large-diameter cylindrical member assembled coaxially for serving as an inner and an outer tube respectively and a cylindrical damper of an elastic material (e.g. rubber) sandwiched between the two tubes, wherein their axial direction extends substantially along the horizontal plane and their elasticity (particularly in a radial direction) where the spring constant is greater is oriented along the driving direction of the belt.

For mounting the damper between the engine and the anchor member, the inner tube arid the outer tube are joined to the engine (which includes legs or other components provided integrally therewith and will be referred as simply an engine hereinafter) and the anchor member respectively or vice versa. The inner tube is commonly tightened to the engine or the anchor member by a bolt or a pin extending through the axial center thereof. For example, when the outer tube and the inner tube are joined to the engine and the anchor member respectively, the outer tube may be displaced by the vibrations of the engine where the piston reciprocates substantially along the horizontal direction. As the displacement of the outer tube is along the axial direction of the tubular damper, the elastic material of which the spring constant is small along the axial direction can be deformed thus allowing the outer tube to move more or less relative to the inner tube. Accordingly, while the outer tube is moved forward and backward together with the engine by the action of the piston, the inner tube remains stationary as tightened to the anchor member. The outer tube linked with the engine has the elastic material set greater in the spring constant in the other directions than the axial direction (particularly in the radial direction). Since the displacement in the other directions are hence minimized relative to the inner tube, its relevant elasticity oriented in the driving direction of the belt can suppress the vibrations of the engine as resisting against the tension strength of the belt.

For damper supporting the engine on the anchor member, the conventional dampers are mounted separately as described above and their location is outwardly of the engine. In other words, it is essential to have a room between the engine and the anchor member for mounting the dampers. This will disturb the compactness of an object on which the engine is installed (e.g. a bonnet of a vehicle).

As the dampers are separately provided from the engine, their types and materials have to be selectively determined depending on the engine and their mounting location should carefully be calculated. Also, it is required for mounting the dampers to both the engine and the anchor member. Moreover, some conventional shapes of the dampers may hardly be tightened simply with a bolt and a nut. A bracket may be provided between the anchor member and the dampers or between the dampers and the engine for ease of mounting the engine to the anchor member. In that case, the positioning and joining is needed between the engine and bracket or between the bracket and the anchor member in addition to the positioning and joining between the dampers and the engine, between the dampers and the bracket, and between the dampers and the anchor member. Accordingly, the overall procedure of installation of the engine will become intricate.

Particularly, when the crank shaft of the engine is supported in a vertical position, the bolt or pin mounted across the axial center of the inner tube for tightening the conventional tubular damper extend in substantially a horizontal direction and its positioning to the engine, the anchor member, or the bracket may be difficult to be done. Also, when the dampers are mounted to the inner side of the anchor member, their handling will be less visible than the mounting from outside. Accordingly, the dampers can hardly be accessed by a tool or hand, hence declining the working conditions. Furthermore, as the conventional tubular dampers are directly mounted without giving a level of provisional elastic deformation in their initial state, their elastic deformation may be emphasized by a stress urged to the elastic material of the dampers from the vibrations of the engine, thus degrading the operational durability.

### Summary of the Invention

A damper supporting structure for an engine according to the present invention is schemed for eliminating the above problems as having the following arrangement. Its arrangement is featured by attaching dampers provided integral with the engine to an anchor member for damper supporting the engine on the anchor member. For installation of the engine, the dampers linked with the engine are readily joined to the anchor member. Accordingly, as compared with any conventional arrangement where the dampers are provided separately of the engine and joined to the engine before the damper supporting process, the overall procedure can be minimized in the number of steps. Also, the positioning process can only be required for tightening the dampers to the anchor member, thus eliminating the intricacy.

Another arrangement of the present invention is featured by attaching dampers installed partially or entirely in corresponding recesses provided integrally in the damper mounting surface of the engine to an anchor member for damper supporting the engine on the anchor member. This allows the engine to be damper supported on the anchor member, hence maintaining the above effect in the damper supporting process (the installation of the engine). Also, while the dampers of the conventional arrangement are exposed outside the engine, the present invention permits the side of the anchor member joined with the damper to come close to the opposite side. As the arrangement is improved in the compactness, it can contribute to the down sizing of peripheral components about the engine and of a structure for containing the components (e.g. a bonnet of a vehicle).

A further arrangement of the present invention for damper supporting on an anchor member an engine which has a crank shaft arranged In substantially a vertical position and a piston arranged for reciprocating movements on substantially a horizontal plane is featured by dampers of which the spring constant is set small along substantially the horizontal plane and which are supported by a bracket for permitting elastic deformation, at least either the dampers or the bracket joined to the engine or the anchor member in substantially a vertical position. For damper supporting the engine, the bracket and the dampers can be tightened to the engine or the anchor member by a bolt or pin held in substantially the vertical direction. This will facilitate the positioning and improving the workability for installation as compared with any conventional arrangement where the bolts or pins are held in substantially the horizontal direction for joining the dampers to the anchor member.

A still further arrangement of the present invention for damper supporting on an anchor member an engine which has a crank shaft arranged in substantially a vertical position and a piston arranged for reciprocating movements on substantially a horizontal plane by means of dampers of which the spring constant is set small along substantially the horizontal plane is featured in that the dampers are located on the side of the anchor member. As the dampers are visible, they can easily be accessed and handled with a tool or the like for mounting or dismounting. Accordingly, the workability for installation of the engine will be improved as compared with any conventional damper supporting structure where the dampers are disposed inside the frame and are hardly visible and accessible by a tool or hand exhibiting unfavorable work conditions. In addition, as the dampers are tightened to the side of the anchor member which is high in the rigidity, they can successfully suppress the generation of intrinsic sounds derived from the vibrations of the components, thus contributing to the quiet operation of the engine.

A still further arrangement of the present invention for damper supporting on an anchor member an engine which has a crank shaft arranged in substantially a vertical position and a piston arranged for reciprocating movements on substantially a horizontal plane by means of the dampers of which the spring constant is set small along substantially the horizontal plane is featured in that the dampers have an elastic material thereof preliminarily pressed and deformed along the direction where their spring constant is set small. If the dampers are not elastically deformed at the initial state, their elastic deformation may be emphasized by the vibrations of a considerable magnitude of the engine. This will increase a strength of tension and degrading the operational durability of the dampers. According to the present invention, the elastic deformation of the dampers by the vibrations of the engine can be minimized hence offsetting the effect of a tension strength and the operational durability of the dampers will be increased.

### Brief Description of the Drawings

Fig. 1 is a schematic front view showing an engine damper supported in a conventional manner.
Fig. 2 is a schematic front view showing an engine damper supported while having been equipped with dampers.
Fig. 3 is a schematic front view showing an engine damper supported while having been equipped with dampers installed in corresponding recesses provided therein.
Fig. 4 is a schematic front view showing an engine damper supported in a conventional manner.
Fig. 5 is a schematic front view showing an engine damper supported while having been equipped with dampers installed in corresponding recessed provided therein.
Fig. 6 is a partially cross sectional schematic front view showing a conventional structure of damper supporting an engine with a bracket equipped with dampers.
Fig. 7 is a partially cross sectional schematic front view showing an engine damper supported with dampers installed in corresponding recesses provided therein and joined by threading to an anchor member.
Fig. 8 is a partially cross sectional schematic front view showing an engine damper supported by a conventional manner with dampers disposed in their tilting state.
Fig. 9 is a partially cross sectional schematic front view showing an engine damper supported with dampers installed in corresponding recesses provided therein while disposed in their tilting state.
Fig. 10 is a schematic front view showing an engine equipped with an oil pan on which dampers are mounted.
Fig. 11 is a schematic front view showing an engine damper supported with tubular dampers installed in corresponding recesses provided therein.
Fig. 12 is a partially cross sectional schematic front view showing an engine damper supported with dampers installed in corresponding recesses provided therein at desired locations.
Fig. 13 is a cross sectional front view of one modification showing an engine 1 damper supported on an anchor member 2 by tubular dampers A of which the outer tube 13 is fitted into a corresponding recess 1a provided in the engine 1 and the inner tube 11 is tightened to the anchor member 2.
Fig. 14 illustrates a similar view of another modification.
Fig. 15 is a side view of a conventional tubular damper A of which the outer tube 13 has a flange 14 and is bolted in parallel with the inner tube 11.
Fig. 16 is a partially cross sectional front view of the same.
Fig. 17 a cross sectional front view of a tubular damper A which has a tightening rod 17 provided to extend upright from the inner tube 11 across the elastic material 12 and can be threaded in a direction orthogonal to the axis of the inner tube 11.
Fig. 18 is a bottom view of the same.
Fig. 19 is a cross sectional front view of a tubular damper A which has a tightening rod 19 provided with a threaded end 19a and joined at one end of the inner tube 11 and can be threaded in a direction orthogonal to the axis of the inner tube 11.
Fig. 20 is a cross sectional view of a tubular damper A which has a stay 19c provided with threaded holes 19d herein.
Fig. 21 is a partially cross sectional front view of a tubular damper A which has a bracket 20 provided with a threaded pin 20a and arranged to support the inner tube 11 from both ends and can be threaded in a direction orthogonal to the axis of the inner tube 11.
Fig. 22 is a partially cross sectional front view of a tubular damper A which has a bracket 20 provided with a threaded hole 20c therein.
Fig. 23 is a side view of a tubular damper A which has threaded rods 21 provided vertically and can be threaded at the outer tube 13 in a direction orthogonal to the axis of the inner tube 11.
Fig. 24 is a partially cross sectional front view of the same.
Fig. 25 is a front view of the threaded rods 21 disposed in different locations.
Fig. 26 is a cross sectional side view showing the tubular damper A, shown in Figs. 23 and 24, installed in the recess 1a for mounting to the engine 1.
Fig. 27 is a cross sectional front view of the same.
Fig. 28 is a cross sectional front view showing the tubular damper A tightened with a bolt pin 22.
Fig. 29 is a cross sectional front view showing the tubular damper A tightened to the side of the engine 1.
Fig. 30 is a cross sectional front view showing the tubular damper A installed in the recess 1a with a bolt 15.
Fig. 31 is a side view of a tubular damper A which has a stay 23 provided thereon and can be bolted at the outer tube 13 in a direction orthogonal to the axis of the inner tube 11.
Fig. 32 is a partially cross sectional front view of the same.
Fig. 33 is a side view of a tubular damper A provided with a stay 24.
Fig. 34 is a partially cross sectional front view of the same.
Fig. 35 is a cross sectional front view of a tubular damper A which has a stay 25 provided with a leg 25a.
Fig. 36 is a cross sectional front view of a tubular damper A of which the inner tube 11 and the outer tube 13 can be threaded in a direction orthogonal to the axis of the inner tube 11.
Fig. 37 is a partially cross sectional schematic front view showing an engine 1 mounted vertically to an anchor member 2 by a support leg 2b provided on the anchor member 2.
Fig. 38 is partially cross sectional front view showing an engine 1 mounted vertically to an anchor member 2 by a bracket 30.
Fig. 39 is a partially cross sectional schematic front view showing an engine 1 damper supported on an anchor member 2 by a bracket 30 joined to a part of the anchor member 2.
Fig. 40 is a cross sectional front view of a tubular damper A of which the inner tube 11 is supported at both ends to a bracket 33 by a pin 34 having threads 34a provided on both ends thereof.
Fig. 41 is a cross sectional front view of a tubular damper A of which the inner tube 11 is supported at both ends to a bracket 33 by a bolt pin 22 having a thread 22a provided on one end thereof.
Fig. 42 is a plan view showing a bracket 30 located in a sound insulator plate 36 sandwiched between an engine 1 and an anchor member 2 and to which the inner tube 11 is tightened by a bolt and a nut which extend outwardly of the bracket 30.
Fig. 43 is a cross sectional view of the same.
Fig. 44 is a plan view showing a bracket 30 located in a sound insulator plate 36 and to which the inner tube 11 is tightened by a bolt and a nut which are setback from the outer side of the bracket 30.
Fig. 45 is a cross sectional view of the same.
Fig. 46 is a cross sectional front view showing a modification of the bracket 30 configured for ease of insertion into a sound insulator plate 36.
Fig. 47 is a cross sectional view showing another modification of the same.
Fig. 48 is a cross sectional front view showing a further modification of the bracket 30 configured for ease of removal from a sound insulator plate 36 after tightened to the anchor member 2.
Fig. 49 is a cross sectional view showing another modification of the same.
Fig. 50 is a cross sectional view showing another modification of the same.
Fig. 51 is a cross sectional front view showing a modification of the bracket 30 configured for ease of insertion into and removal from a sound insulator plate 36.
Fig. 52 is a schematic front view of the tubular dampers A mounted between an engine 1 and an anchor member 2 beneath the engine 1 and above the anchor member 2.
Fig. 53 illustrates the same mounted beneath the engine 1 and on the inside of each side of the anchor member 2.
Fig. 54 illustrates the same mounted on each side of the engine 1.
Fig. 55 illustrates the same mounted beneath the engine 1 and on the outer surface of each side of the anchor member 2.
Fig. 56 is a partially cross sectional front view of the tubular damper A shown in Fig. 55.
Fig. 57 is a partially cross sectional front view of another modification of the tubular damper A.
Fig. 58 is a partially cross sectional view of tubular dampers A which are located beneath an engine 1 and of which the inner tube 11 is tightened to each side of an anchor member 2 and the outer tube 13 is tightened to a leg 29 mounted outwardly of the side of the anchor member 2.
Fig. 59 is a partially cross sectional view of tubular dampers A which are located beneath an engine 1 and of which the inner tube 11 is tightened to each side of an anchor member 2 and the outer tube 13 is tightened to a leg 29 mounted inwardly of the side of the anchor member 2.
Fig. 60 is a partially cross sectional view of tubular dampers A which are located beneath an engine 1 and of which the outer tube 13 is tightened to each side of an anchor member 2 and the inner tube 11 is tightened to a leg 29 mounted outwardly of the side of the anchor member 2.
Fig. 61 is a partially cross sectional front view of a modification of tightening the outer tube 13 to the side of the anchor member 2.
Fig. 62 is a partially cross sectional view of tubular dampers A which are located beneath an engine 1 and of which the outer tube 13 is tightened to each side of an anchor member 2 and the inner tube 11 is tightened to a leg 28 mounted inwardly of the side of the anchor member 2.
Fig. 63 is a partially cross sectional view of tubular dampers A which are located beneath an engine 1 and of which the outer tube 13 is tightened to each side of an anchor member 2 and the inner tube 11 is tightened to two legs 28 and 29 mounted on the inside and the outside of the side of the anchor member 2 respectively.
Fig. 64 is a partially cross sectional view of tapered dampers B which are located beneath an engine 1 and of which the outer tube 13 is tightened to each side of an anchor member 2 and the inner tube 11 is tightened to a leg 29 mounted outwardly of the side of the anchor member 2.
Fig. 65 is a partially cross sectional view of tapered dampers B which are located beneath an engine 1 and of which the outer tube 13 is tightened to each side of an anchor member 2 and the inner tube 11 is tightened to a leg 28 mounted inwardly of the side of the anchor member 2.
Fig. 66 is a partially cross sectional view of tapered dampers B which are located beneath an engine 1 and of which the outer tube 13 is inserted into and tightened to each side of an anchor member 2 and the inner tube 11 is tightened to a leg 29 mounted outwardly of the side of the anchor member 2.
Fig. 67 is a partially cross sectional view of tapered dampers B which are located beneath an engine 1 and of which the outer tube 13 is tightened to each side of an anchor member 2 and the inner tube 11 is tightened to a leg 28 mounted inwardly of the side of the anchor member 2.
Fig. 68 is a partially cross sectional view of tapered dampers B which are located beneath an engine 1 and of which the inner tube 11 is tightened to each side of an anchor member 2 and the outer tube 13 is tightened to a leg 29 mounted outwardly of the side of the anchor member 2.
Fig. 69 is a partially cross sectional view of tapered dampers B which are located beneath an engine 1 and of which the inner tube 11 is tightened to each side of an anchor member 2 and the outer tube 13 is tightened to a leg 28 mounted inwardly of the side of the anchor member 2.
Fig. 70 is a partially cross sectional view of tapered dampers B which are located beneath an engine 1 and of which the inner tube 11 is tightened to each side of an anchor member 2 and the outer tube 13 is inserted into and tightened to a leg 29 mounted outwardly of the side of the anchor member 2.
Fig. 71 is a partially cross sectional view of tapered dampers B which are located beneath an engine 1 and of which the inner tube 11 is tightened to each side of an anchor member 2 and the outer tube 13 is inserted into and tightened to a leg 28 mounted inwardly of the side of the anchor member 2.

### Best Modes for carrying out the Invention

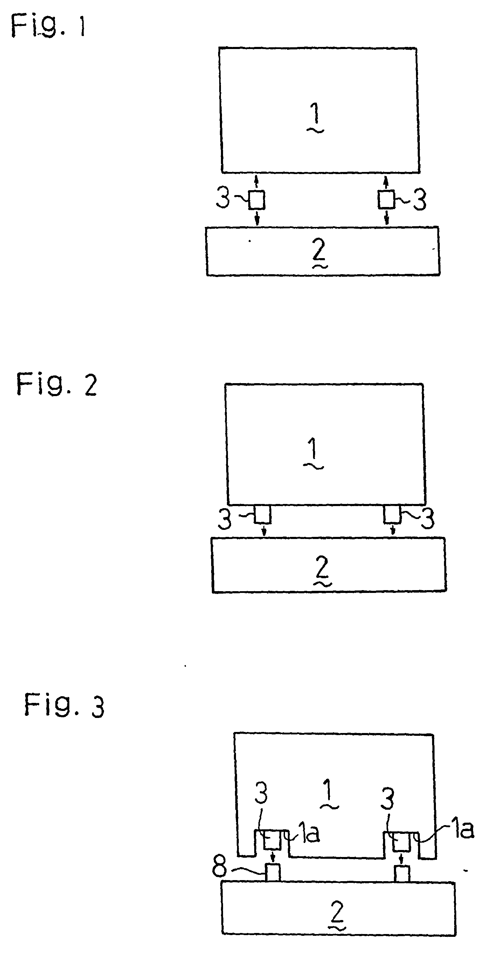

Referring to Figs. 1 to 12, some arrangements where an engine 1 is mounted to an anchor member 2 by dampers 3 accommodated directly in corresponding recesses 1a provided in the engine 1 will first be described.

As shown in Fig. 1, a conventional arrangement has dampers 3 joined at one end to the anchor member 2 (e.g. by bolts being threaded) and at the other end to the engine 1 (e.g. by bolts being threaded) for damper supporting the engine 1 to the anchor 2 such as a chassis or a frame. More specifically, it is essential that each damper 3 is mounted to both the engine 1 and the anchor member 2.

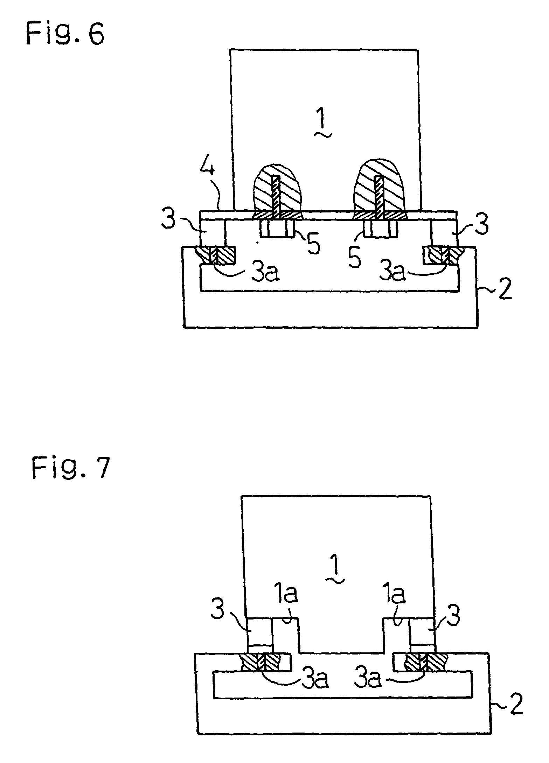

Also, in another conventional arrangement, as the dampers 3 are mounted to the engine 1, they may be joined to a bracket 4 before their assembly is mounted to the engine 1 as shown in Fig. 6. It is then necessary to position and tighten the bracket 4 in relation to the engine 1 (by bolts 5 in this arrangement) while the dampers 3 are located and mounted to the anchor member 2 (with their threaded portions 3a threaded into the anchor member 2 in this arrangement). The positioning has to be repeated two times at two, upper and lower, locations, hence making the installation process difficult.

For compensation, the dampers 3 may preliminarily be joined to the engine 1 so that the mounting of the dampers 3 to the anchor member 2 can be eased, as shown in Fig. 2.

As shown in Fig. 3, the engine 1 has recesses 1a provided therein for accepting the corresponding dampers 3 partially or entirely. However, the installation of the dampers 3 into the recesses 1a of the engine 1 is not an easy task, which may be carried out separately, because it is poor in the visibility and hardly be accessed by hand or with any tool. This will render the damper supporting process more difficult. According to one embodiment of the present invention, the dampers 3 are installed in the recesses 1a provided in the engine 1 during the engine manufacturing process as shown in Fig. 3. This allows the dampers 3 to be simply mounted to the anchor member 2 during the damper supporting process (in this embodiment, to stays 8 protruded from the upper surface of the anchor member 2). A modification is shown in Fig. 7 where each damper 3 in the recess 1a of the engine 1 has a threaded portion 3a thereof and can thus be threaded into the anchor member 2 for joining.

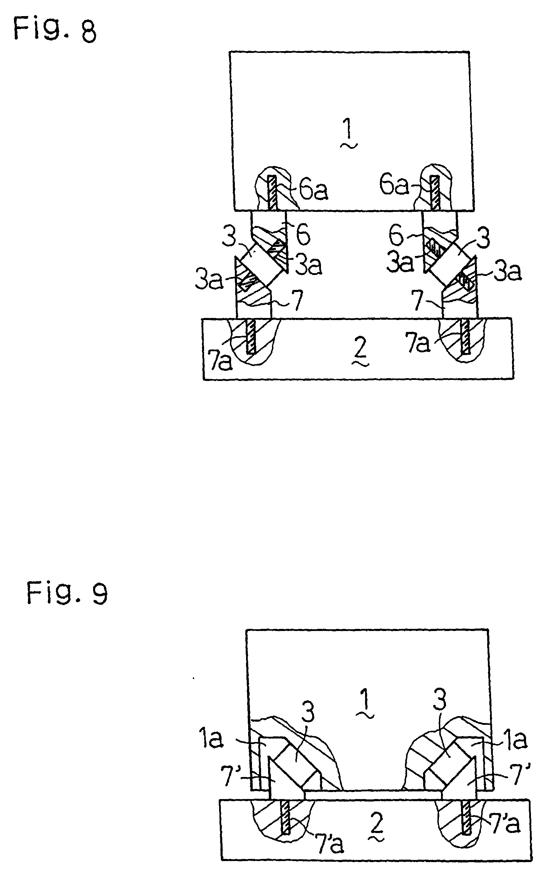

The dampers may be mounted in tilting relationship, corresponding to the condition of vibrations on the engine. For example, Fig. 8 illustrates a conventional arrangement where stays 6 are provided on the bottom of the engine 1, each stay having a lower side thereof tilted. Also, a corresponding number of stays 7, each having an upper side tilted, are mounted on the upper surface of the anchor member 2. The lower tilted side of each stay 6 of the engine 1 is joined by a damper 3 to the upper tilted side of the corresponding stay 7 of the anchor 2. More specifically, threaded portions 3a of the damper 3 are threaded at both ends into the two stays 6 and 7 for damper supporting the engine 1. The threading of the threaded portions 3a of the damper 3 has to be conducted at an angle and will thus be intricate. As shown, the stay 6 has a threaded portion 6a thereof threaded into the bottom of the engine 1 while the stay 7 has a threaded portion 7a thereof threaded into the upper surface of the anchor member 2. Accordingly, threading process will be increased in steps. An embodiment shown in Fig. 9 permits the engine 1 to have recesses 1a provided therein for accepting the corresponding dampers 3 at an angle. The damper 3 installed in the recess 1a is equipped with a stay 7'. For damper supporting the engine 1, a threaded portion 7'a of each stay 7' is threaded into the anchor member 2.

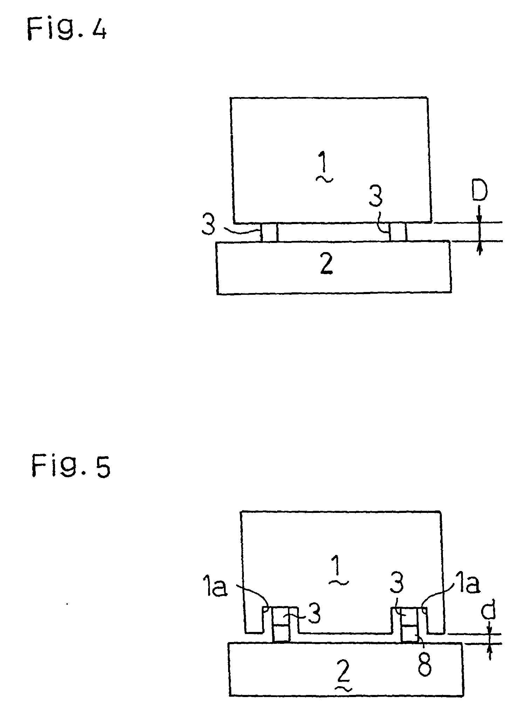

The principle of installing the damper 3 into the recess 1a of the engine 1 will now be explained referring to Figs. 4 and 5. If the dampers 3 are directly mounted to an outer surface (the bottom) of the engine 1 provided with no recesses 1a as shown in Figs. 1 and 2, there may be developed a vertical gap D, at least equal to the height of the damper 3, between the bottom of the engine 1 and the upper side of the anchor member 2 as shown in Fig. 4. (In the arrangement shown in Fig. 6, the thickness of the bracket 4 is added. In the arrangement shown in Fig. 8, the thickness of both the upper 6 and the lower stay 7 is added.) As a result, the height up to the top of the engine 1 will be increased. This causes a bonnet (of which the engine room accommodates the engine 1) to increase in the overall height. In other words, the engine room has to be widened in the dimensions.

When the engine 1 has the recesses 1a and the dampers 3 are installed in the corresponding recesses 1a partially or entirely for damper supporting the engine 1 (in the embodiment, the stays 8 on the anchor member 2 are partially projected from the bottom of the engine 1), the vertical gap d between the bottom of the engine 1 and the upper surface of the anchor member 2 is smaller than the gap D equal to the height of the damper 3. Accordingly, as the top of the engine 1 is kept lower, elastic deformation of the dampers 3 caused by the vibrations of the engine 1 is limited within the recesses 1a. The overall height of the engine 1 from the anchor member 2 positioned at a given location can successfully be reduced as compared with the arrangement shown in Fig. 6 and also, the structure of components and materials about the engine 1 can be made compact.

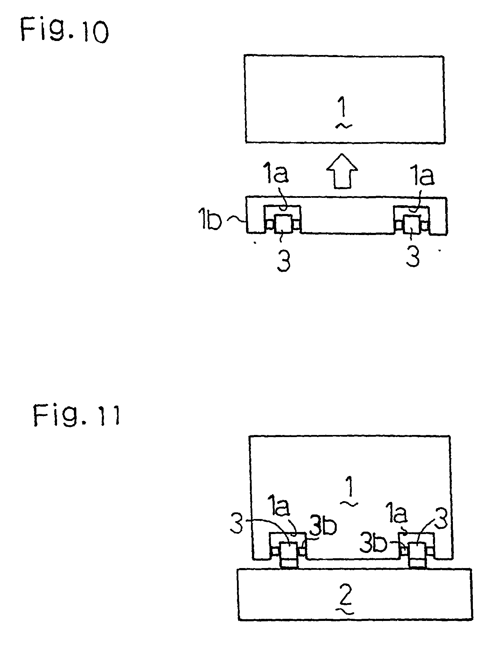

A technique of installing the dampers 3 into the corresponding recesses 1a of the engine 1 during the engine manufacturing process prior to the damper supporting process may include mounting of the dampers 3 to a part of the engine 1 separated from the main body of the engine 1 as shown in Fig. 8. Fig. 10 illustrates another technique of providing the recesses 1a in an oil pan 1b which is a detachable part of the engine 1 as having been separated from the main body of the engine 1 and installing the dampers 3 into the corresponding recesses 1a. While the recesses 1a are provided directly in a crank case or a cylinder block as the main body of the engine 1 and the dampers 3 are installed in the corresponding recesses 1a, the installation process will be difficult due to the weight of the engine 1. The technique shown in Fig. 10 permits the dampers 3 to be readily installed in the recesses 1a provided easily in the oil pan 1b which is lighter in the weight. The oil pan 1b is then joined to the bottom of the engine 1 to incorporate the dampers 3 with the engine 1. The part of the engine 1 to which the dampers 3 are mounted is not limited to the oil pan 1b of this embodiment but may be any separable member, such as a gear cover on the crank case, which can easily be machined for having the recesses 1a and joined with the dampers 3.

The dampers 3 may be arranged of a shape of which the spring constant is set smaller in a desired direction. When the damper 3 is made of, for example, a tubular rubber, its spring constant is small along the axis but great in its radial direction. The dampers 3 can effectively suppress vibrations on the engine 1 when their axially extending pins or bolts 3b are located at optimum locations. When the crank shaft of the engine 1 is supported in substantially a vertical position, as will be described later in more detail, its vibrations derived from the rotation dissipate from the axis to substantially horizontal directions. As shown in Fig. 11, the dampers 3 of a tubular shape are installed in the corresponding recesses 1a provided in the bottom of the engine 1 with their axial pins or bolts 3b extending in substantially a horizontal direction. With their portions where the spring constant is small held in substantially the horizontal direction, the dampers 3 can effectively absorb the vibrations of the engine 1 and thus inhibit the transmission of the vibrations to the anchor member 2.

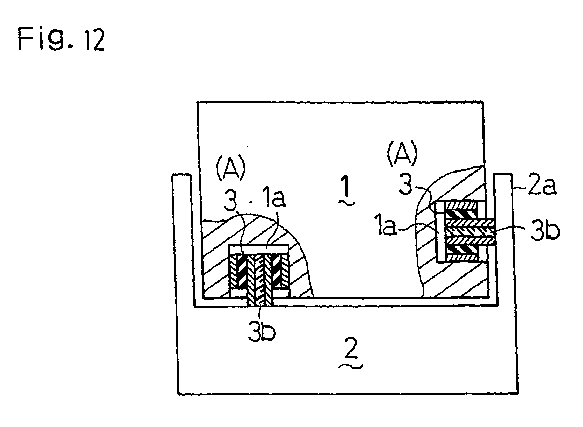

The recesses 1a of the engine 1 are provided at specific locations by machining depending on the direction of the vibrations of the engine 1 developed during the running while the dampers 3 installed in the recesses 1a are arranged with its elastic strength oriented for optimum damper supporting action. For example, as shown in Fig. 12, the dampers 3 are mounted for absorbing the vibrations of the engine 1 along both the vertical and horizontal directions. The damper 3 of a tubular material installed in the recess 1a provided in the bottom is mounted to the anchor member 2 with its axial pin or bolt 3b extending in substantially the vertical direction while the damper 3 installed in the recess 1a provided in the side is mounted to the anchor member 2 with its axial pin or bolt 3b extending in substantially the horizontal direction. A technique of mounting the dampers 3 to the engine 1 in this embodiment consists of pressing an outer tube of each damper 3, explained later, against the wall of the recess 1a or forcing each damper 3 into the corresponding recess 1a.

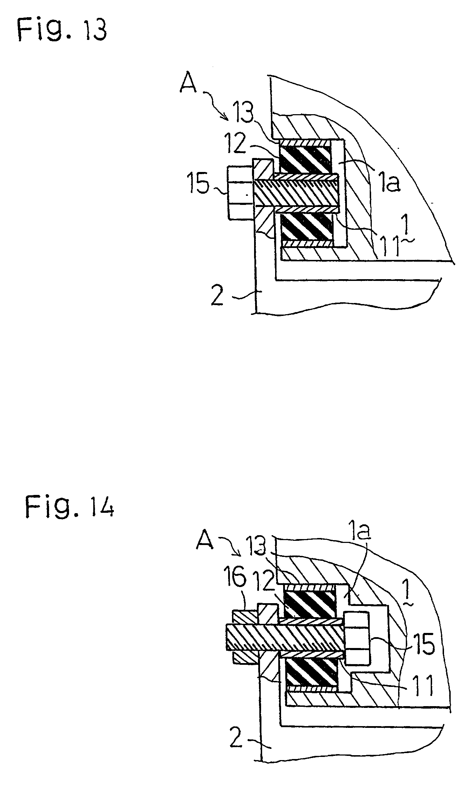

Referring to Figs. 13 to 71, arrangements will be described for damper supporting a vertical crank shaft type of the engine 1 (having the crank shaft supported in substantially a vertical position) with the use of tubular dampers A, each damper comprising an inner tube 11, an elastic material 12 such as rubber, and an outer tube 13.

The tubular damper member A includes primarily the inner tube 11 having a through hole provided therein axially for accepting a pin or bolt, the elastic material 12 such as rubber of a ring shape fitted on the inner tube 11, and the outer tube 13 fitted on the elastic material 12. The inner tube 11 is longer in the axial length than the outer tube 13 and projects at both axial ends outwardly from the axial ends of the outer tube 13. As the elastic material 12 is elastically deformed, the inner tube 11 and the outer tube 13 are relatively displaced from each other along the axial direction. More specifically, the outer tube 13 is variable in the position relative to but within a range between the two axial ends of the inner tube 11. On the contrary, the outer tube 13 is hardly changed in the position along the other directions (particularly, the radial direction) than the axial direction because its spring constant is great along the other directions than the axial direction.

As described above, the tubular damper A has such a characteristic that the spring constant is small along the axial direction. The engine 1 performs reciprocating movements of its piston and thus develops vibrations in substantially the horizontal direction. When the dampers A are arranged with their axes extending along substantially a horizontal plane, their elastic deformation can favorably absorb the vibrations. On the same horizontal plane, a strength of tension is however developed along the running direction of the belt. For maintaining the durability of the tubular dampers A, their other directions than the axial direction or preferably their radial direction is aligned with the running direction of the belt.

The tubular dampers 3 are arranged with their axial direction extending in substantially the horizontal direction for damper supporting the engine 1 of which the crank shaft is held in substantially the vertical position. The inner tube 11 and the outer tube 13 of each damper A are allocated and joined to the engine 1 and the anchor member 2 (or the anchor member 2 and the engine 1) respectively. It is assumed that the inner tube 11 is joined to the engine 1 and the outer tube 13 is joined to the anchor member 2. As the inner tube 11 is vibrated by the vibrations of the engine 1, the elastic member 12 elastically deforms thus to dislocate the outer tube 13 relative to the inner tube 11 and protect the outer tube 13 and the anchor member 2 from being vibrated.

The inner tube 11 or the outer tube 13 (or both) of the tubular damper A is tailored for joining to the engine 1 or the anchor member 2 (or a bracket). In the embodiment shown in Fig. 12, the inner tube 11 is joined by a bolt extending axially to a vertical portion 2a of the anchor member 2 arranged opposite to the recess 1a provided horizontally in a side of the engine 1 while the outer tube 13 is forced into the recess 1a and fixedly joined to the engine 1.

Arrangements shown in Figs. 13 and 14 are similar where a tubular damper A is forced with its inner tube 11 extending horizontally into a recess 1a provided horizontally in a side of the engine 1 (with its opening on the side) so that its outer tube 13 presses against the wall of the recess 1a. In particular, the damper A is tightened by a bolt 15 fitted into the axial bore of its inner tube 11 to a vertical portion 2a of the anchor member 2 which comes opposite to the opening of the recess 1a.

Fig. 13 illustrates the bolt 15 arranged with its head disposed outside the vertical portion 2a and threaded from the outside horizontally into the inner tube 13. Fig. 14 illustrates the bolt 15 arranged with its head disposed in the recess 1a deeper than the tubular damper A for allowing the bolt 15 and the tubular damper A to be preliminarily joined to the engine 1 with its leg extending horizontally to the outside. During the installation process, the leg of the bolt 15 is fitted into the vertical portion 2a of the anchor member 2 and threaded with a nut 16 for tightening the vertical portion 2a with the damper A.

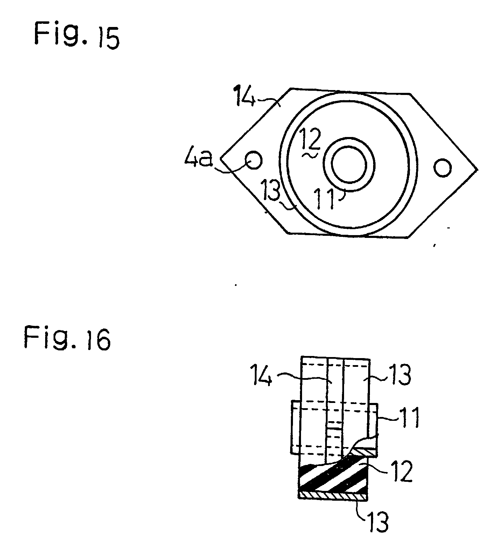

When the axial direction of the inner tube 11 is aligned with substantially the horizontal direction for joining to the anchor member 2, the bolt 15 extends horizontally and may rarely be visible enough to be handled. Figs. 15 and 16 illustrate a conventional tubular damper A with its outer tube 13 having a thread. The outer tube 13 includes a flange 14 which has threaded holes 14a provided therein in parallel with the axis. When the axis extends in a horizontal direction, the threaded holes 14a are horizontal for allowing the flange 14 to be joined to the anchor member 2 by bolts extending horizontally. Accordingly, both the inner tube 11 and the outer tube 12 have to be bolted horizontally.

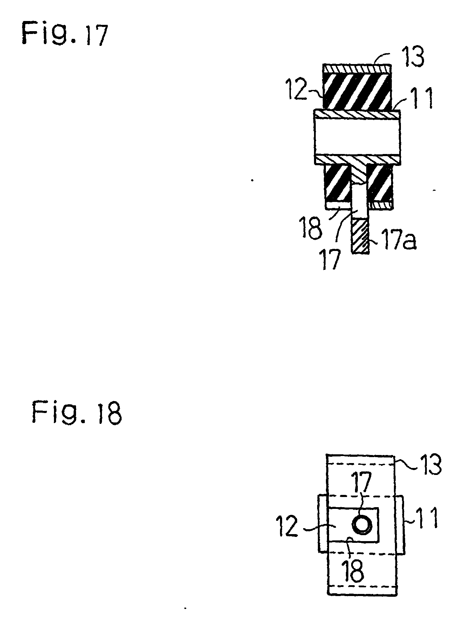

Some modifications of the tubular damper A where at least either the inner tube 11 or the outer tube 13 is positioned and bolted vertically for joining to the engine 1 or the anchor member 2 will be described referring to Figs. 17 to 36. It is assumed throughout the modifications that the inner tube 11 or the outer tube 13 is bolted vertically to the anchor member 2 with the axis of the inner tube 11 extending horizontally and the anchor member 2 located beneath the tubular damper A.

Figs. 17 to 22 illustrate the tubular damper A with its inner tube 11 arranged for joining by threading in a direction orthogonal to its axis (the vertical direction). As shown in Figs. 17 and 18, the tubular damper A has a tightening rod 17 provided on the inner tube 11 to extend at a right angle to the axis of the inner tube 11 and across the elastic material 12. The outer tube 13 has a notch 18 provided therein for clearing the tightening rod 17 extending outwardly. The tightening rod 17 extends in substantially the vertical direction when the axis of the inner tube 11 is set in substantially the horizontal direction. The tightening rod 17 has a thread 17a provided on a distal end thereof for threading vertically into the anchor member 2. More specifically, the inner tube 11 can be joined by its vertical thread 17a to the anchor member 2.

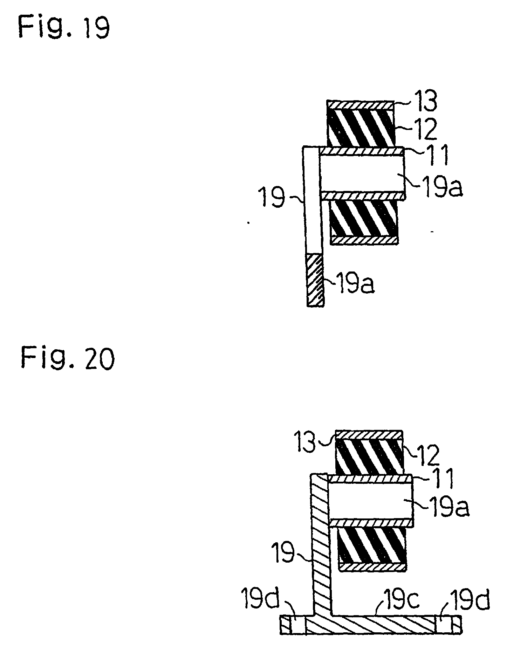

Figs. 19 and 20 illustrate the tubular damper A including a tightening rod 19 thereof provided perpendicularly with a pin 19a which is fitted into the axial hole of the inner tube 11. The tightening rod 19 shown in Fig. 19 has a thread 19b provided on a lower end thereof. The tightening rod 19 shown in Fig. 20 has a stay 19c mounted to the lowermost thereof to extend horizontally (in parallel with the axis). The stay 19c has threaded holes 19d provided therein to extend vertically (in parallel with the radial direction). The inner tube 11 of the tubular damper A is joined to the anchor member 2 with the thread 19b threaded vertically into the anchor member 2 as shown in Fig. 19 or by bolts threading vertically through the stay 19c into the anchor member 2 on which the stay 19c is seated horizontally as shown in Fig. 20.

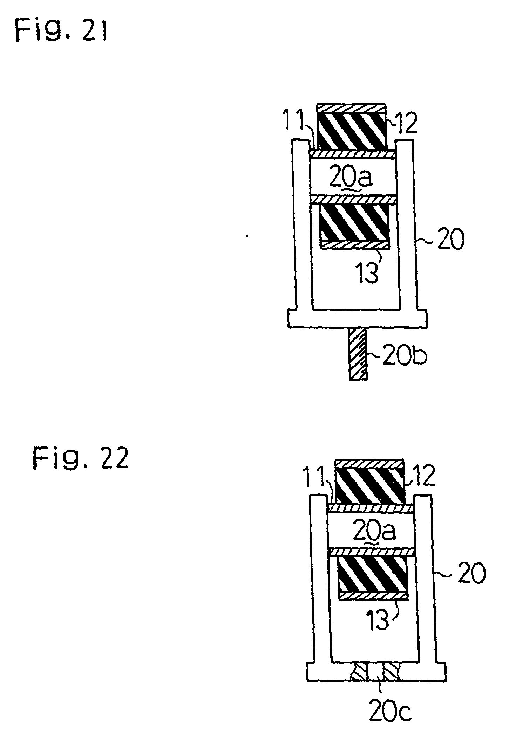

Figs. 21 and 22 illustrate a bracket 20 having a pin 20a thereof supported at both ends to extend through the axial hole of the inner tube 11. The bracket 20 also has a threaded rod 20b provided on the bottom thereof extending downwardly as shown in Fig. 21 or a threaded hole 20c provided vertically in the bottom thereof as shown in Fig. 22. In either case, the bracket 20 linked with the inner tube 11 can be joined vertically by threading to the anchor member 2.

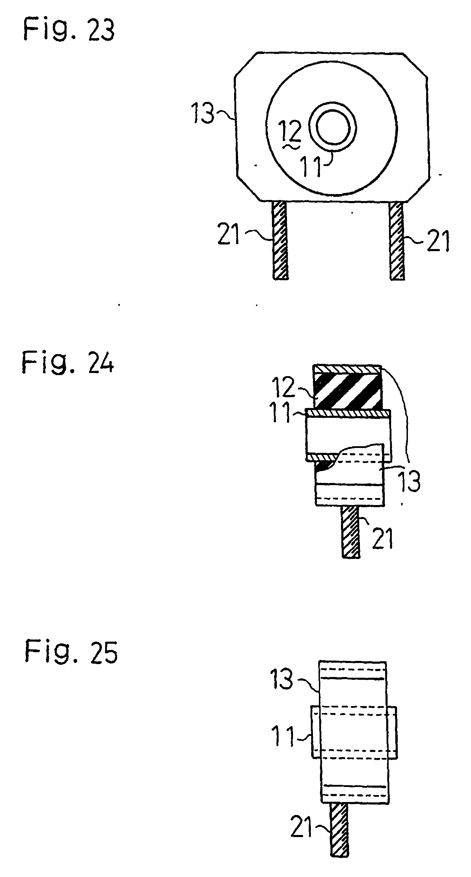

Modifications of the tubular damper A for joining vertically to the anchor member 2 with the outer tube 13 will be explained referring to Figs. 23 to 35.

Figs. 23 to 25 illustrate the tubular damper A with the outer tube 13 enlarged partially or entirely along the horizontal direction. As shown in Fig. 23, the enlarged portion has threaded rods 21 extending vertically from the bottom thereof. The threaded rods 21 may optionally be located relative to the inner tube 11 as shown in Fig. 24 or 25.

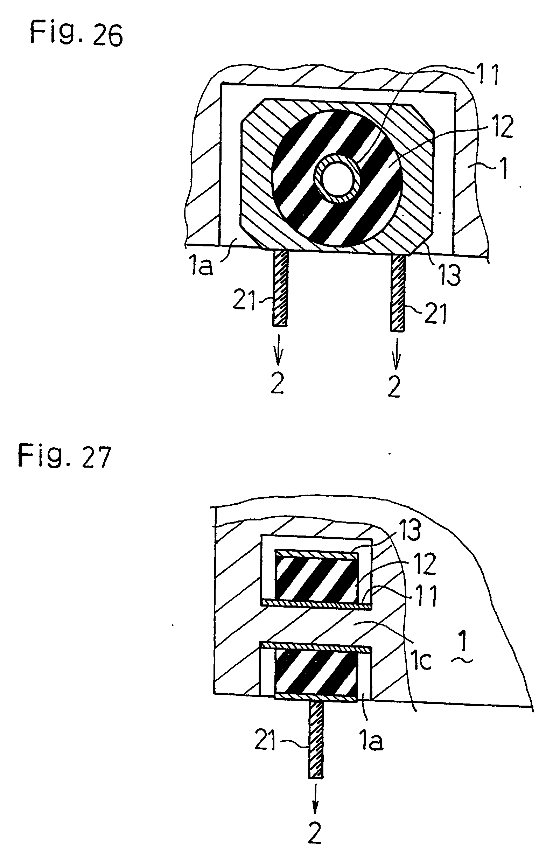

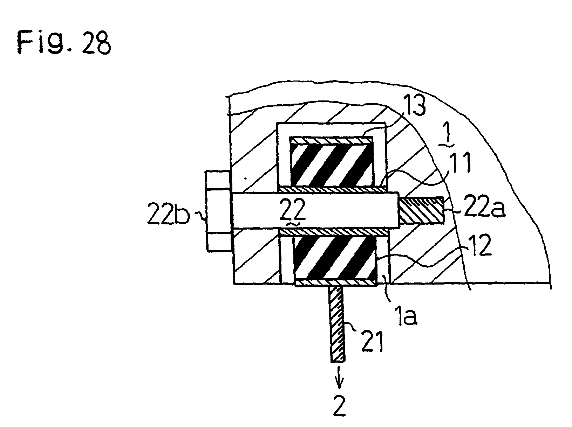

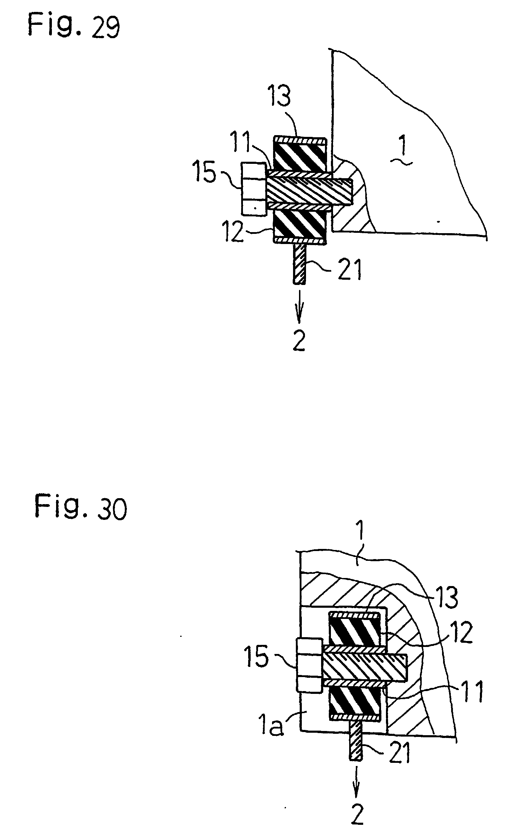

Figs. 26 to 28 illustrate the tubular damper A with the threaded rods 21 joined to a side of the engine 1 or installed in the recess 1a provided in the engine 1. The inner tube 11 shown in Fig. 27 is fitted on a shaft 1c provided as a part of the engine 1 while the inner tube 11 shown in Fig. 28 has a bolt pin 22 extending in the axial hole thereof to thread with its threaded end 22a into the engine 1 (with its head 22b located outside the engine 1) for joining to the engine 1 by threading. Fig. 29 illustrates the tubular damper A joined by a bolt 15 to a side of the engine 1 having no recess 1a. Fig. 30 illustrates the tubular damper A joined by a bolt 15 to the engine 1 at the recess 1a opening outwardly. In either case, the tubular damper A is joined at its inner tube 11 to the engine 1. This allows the tubular damper A to be readily joined to the anchor member A with its threaded pin 21 of the outer tube 13 threading vertically.

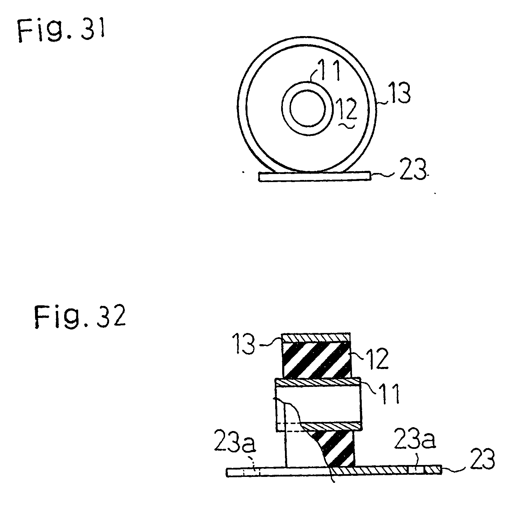

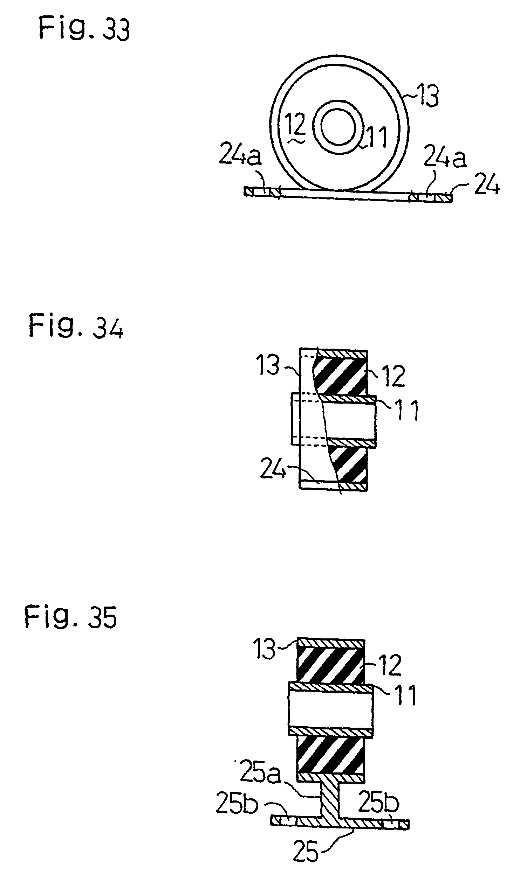

Other modifications for permitting the outer tube 13 to be joined vertically by threading are shown in Figs. 31 and 32 as well as Figs. 33 and 34 where stays 23 and 24 are provided to extend horizontally and outwardly from the lowermost of the outer tube 13. Fig. 35 illustrates the tubular damper A having a vertical leg 25a which is in turn joined to a horizontally extending stay 25. The stays 23, 24, and 25 have vertical threaded holes 23a, 24a, and 25a provided therein respectively. With bolts threaded through the threaded holes 23a, 24a, and 25a, the stays 23, 24, and 25 or the outer tubes 13 can be joined to the anchor member 2.

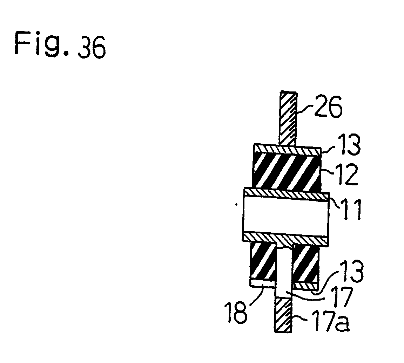

The tubular damper A may also be modified as shown in Fig. 36 where both the inner tube 11 and the outer tube 13 are joined vertically by threading to the anchor member 3 or the engine 1. The arrangement is fundamentally identical to that shown in Fig. 17 but is featured in that while the tightening rod 17 extends downwardly from the inner tube 11, a threaded rod 26 is provided upright on the upper side of the outer tube 13 to extend opposite to the tightening rod 17. More specifically, while the inner tube 11 is joined vertically at a thread 17a of its tightening rod 17 to the anchor member 2, the outer tube 13 is joined vertically at its threaded rod 26 to the engine 1 for damper supporting the engine 1.

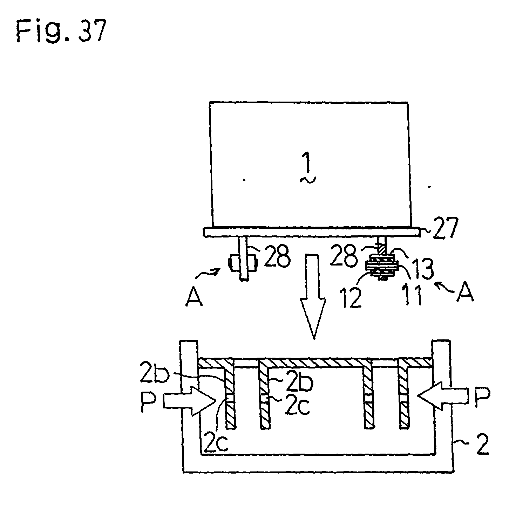

A technique of mounting vertically on the anchor member 2 the engine 1 which has vertical legs 28 provided with the tubular dampers A (as located inwardly of the two ends of the anchor member 2) will now be described referring to Figs. 37 to 39.

As shown in Fig. 37, a horizontal plate 27 is joined to the bottom of the engine 1 and the vertical legs 28 are mounted downwardly on the lower side of the plate 27. The outer tube 13 of the tubular damper A is joined to each of the vertical legs 28. Provided on the anchor member 2 are leg supports 2b which extend vertically and have horizontal pin (threaded) holes 2c provided therein for holding the inner tubes 11 with pins (bolts). For installation, the engine 1 is vertically lifted down together with the tubular dampers A until the tubular dampers A are seated in the corresponding leg supports 2b. This is followed by pin or bolts horizontally inserted into the pin holes 2c (threaded holes) of the leg supports 2b to secure the tubular dampers A. As the legs 27 are located inwardly of the two ends of the anchor member 2, the tubular dampers A are joined to the anchor member 2 at locations inwardly of the two ends. Also, the pins or bolts are inserted horizontally (as denoted by the arrow marks P). As a result, the joining may not be an easy task.

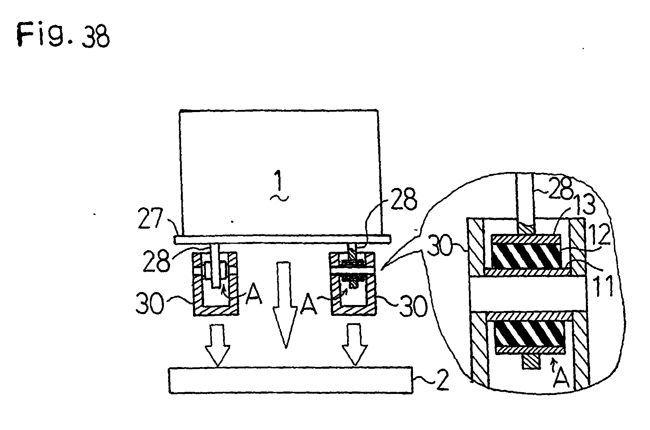

For compensation, brackets 30 shown in Fig. 38 may be provided. The bracket 30 is shaped of an upper open (square) cylinder in which the tubular damper A is horizontally installed with a pin or a bolt. As the vertical legs 28 extending from the bottom of the engine 1 (as located inwardly of the two ends of the anchor member 3) are inserted from above into the opening of the brackets and joined to the outer tubes 13 respectively. Accordingly, the outer tubes 13 are joined to the engine 1 while the inner tubes 11 are joined to the brackets 30. The bottom of the bracket 30 is flat and has a vertically threaded hole provided therein. For installation of the engine 1, the brackets 30 with the engine 1 are vertically lifted down, placed on the anchor member 2, and tightened by threading bolts vertically. The brackets 30 are lighter in the weight than the engine 1 and their positioning is facilitated. As a result, the engine 1 can favorably be positioned relative to and over the anchor member 2.

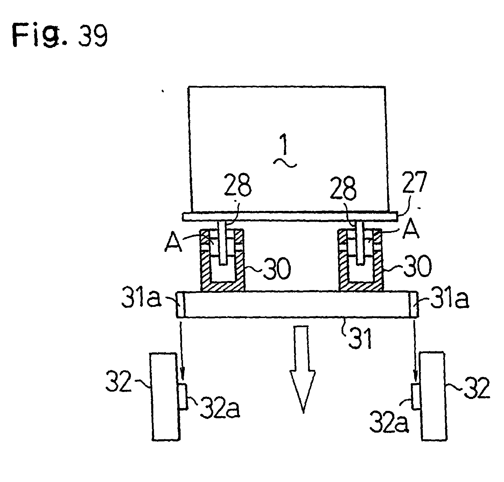

The brackets 30 may be joined at the bottom to a plate 31 which is a part of the anchor member 2 as shown in Fig. 39. As the plate 31 is adapted for damper supporting the engine. 1, its mounting ends 31a are joined to mount tabs 32a of two side walls 32 of the anchor member 2. The joining between the mounting ends 31a and the mount tabs 32a may be carried by welding or bolting.

A technique of supporting the inner tune 11 of the tubular damper A at both ends with vertical brackets 33 (two arms of the bracket 30) will be explained.

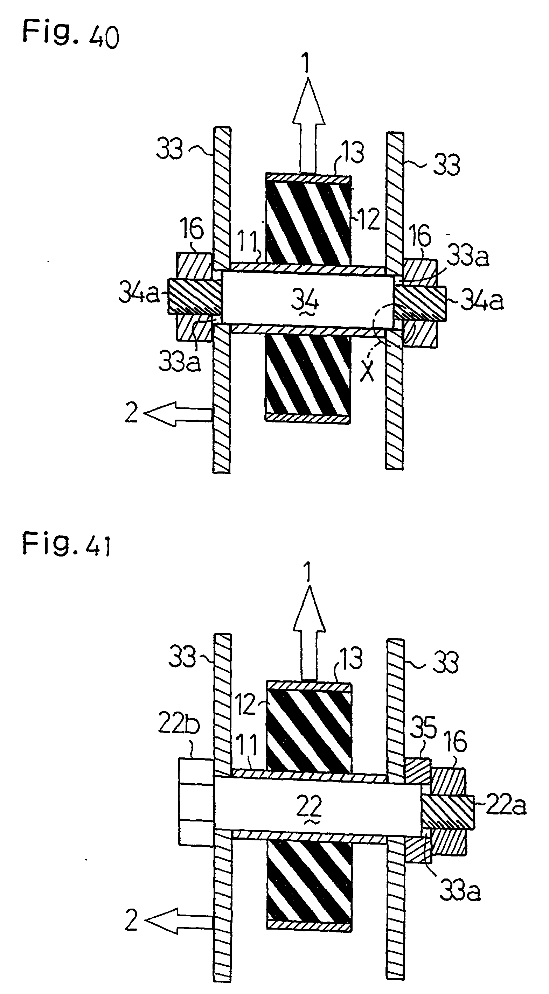

As shown in Fig. 40, a pin 34 fitted in the axial hole of the inner tube 11 has two threads 34a provided on both ends thereof. As the pin 34 is inserted through pin holes 33a of the corresponding brackets 33, its threads 34a extend outwardly of the brackets 33. Nuts are threaded on the threads 34a of the pin 34 from the outside of the brackets 33 to tighten the brackets 33 with the pin 34. While the pin 34 is supported to extend at both ends through the pin holes 33a, its axial positioning in the pin hole 33a of each bracket 33 is critical in accuracy as denoted by the circle X.

Fig. 41 illustrates a bolt pin 22 which extends through the inner tube 11 and has a thread 22a at one end and a bolt head 22b at the other end. As the bolt head 22b is located on the outer side of one bracket 33, the thread 22a of the bolt pin 22 extends through the pin hole 33a of the other bracket 33 and has a spacer 35 fitted thereon. As a nut 16 is threaded from the outside onto the thread 22a of the bolt pin 22, it can tighten the spacer 35. Accordingly, the action of threading the nut 16 can be carried at once while the axis positioning of the bolt pin 22 is unnecessary.

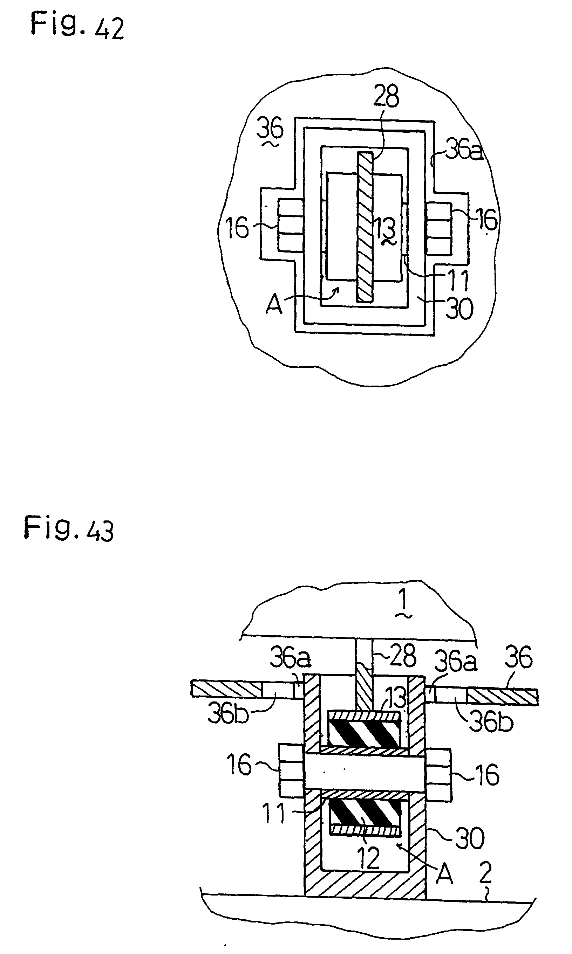

As shown in Figs. 38 and 39, the plate 31 located beneath the engine 1 which is joined to the anchor member 2 by the brackets 30 with the tubular dampers A may serve as a sound insulator. The tubular dampers A may be lowered to beneath the plate 31 for inhibiting noises of the engine 1 from being transmitted downwardly. Modifications of the bracket 30 in combination with a sound insulator plate 36 disposed between the engine 1 and the anchor member 2 will now be explained referring to Figs. 42 to 51.

Figs. 42 and 43 illustrate the bracket 30 with a bolt 15 or a bolt pin 22 of which the head or nuts 16 are located on both sides of the bracket 30 (the nuts 16 shown may be replace by the head of the bolt 15 or the head 22b of the bolt pin 22). A sound insulator plate 36 extending in substantially a horizontal direction has an opening 36a provide therein for clearing the bracket 30. The opening 36a is enlarged with notches 36b for accepting any outward extensions such as the nuts 16, thus allowing sounds of the engine 1 to escape from a gap between the nuts 16 and the notches 36b wall which is undesirably widened as seen from the above.

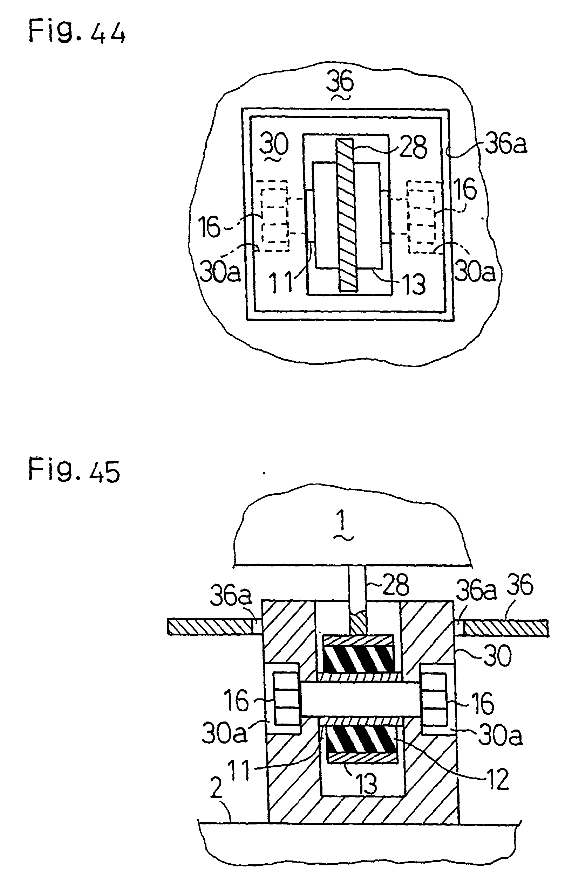

For inhibiting the nuts 16 from extending outwardly from the bracket 30, the bracket 30 may be modified as shown in Figs. 44 and 45 where two recesses 30a are provided in the side walls of the bracket 30 supporting the inner tube 11. As the nuts 16 are accommodated in the corresponding recesses 30a, the bracket 30 exhibits no extensions. This allows the opening 36a of the sound insulator plate 36 to be sized precisely to match the contour of the bracket 30 without providing the notches 36b which create the gap. Accordingly, the sound insulator plate 36 can clear the bracket 30 with a minimum gap as well as function favorably as the sound insulator.

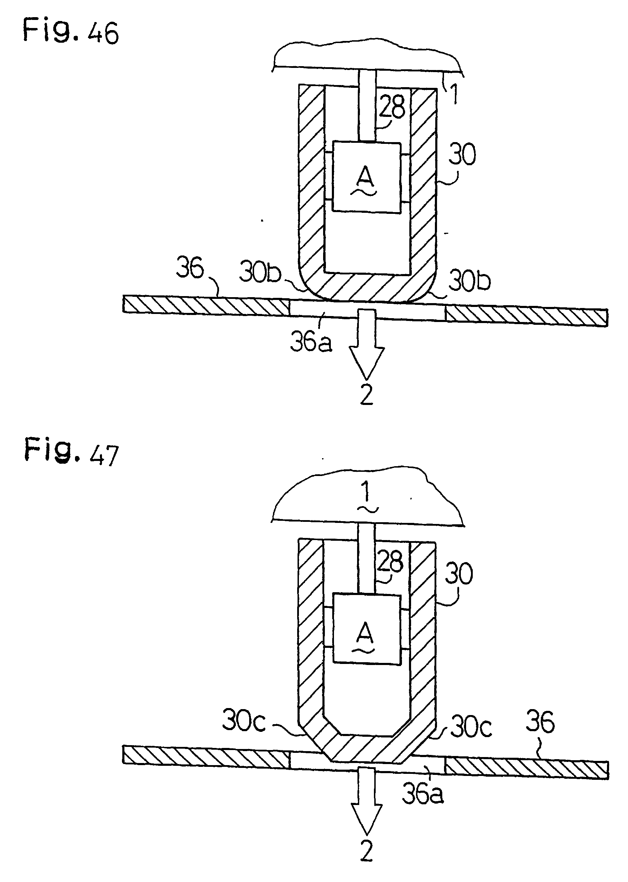

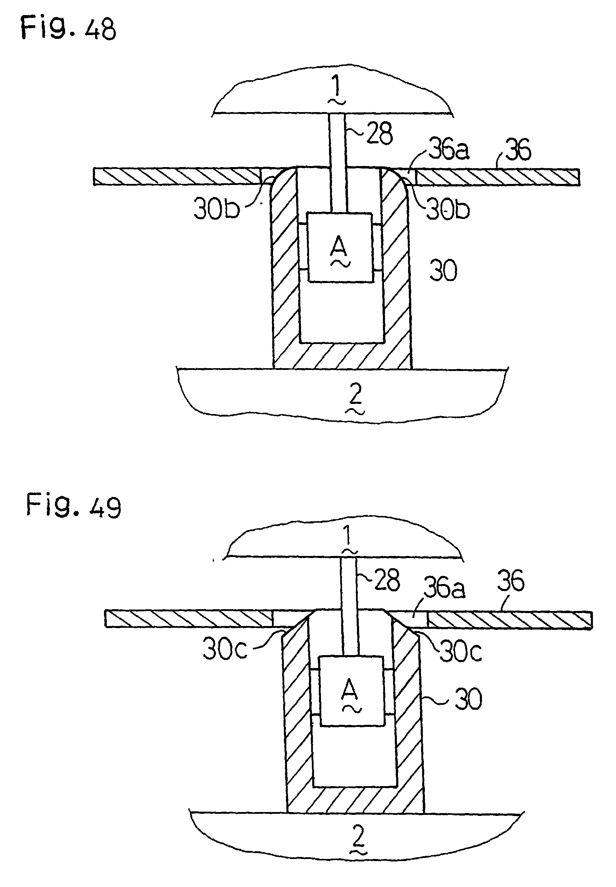

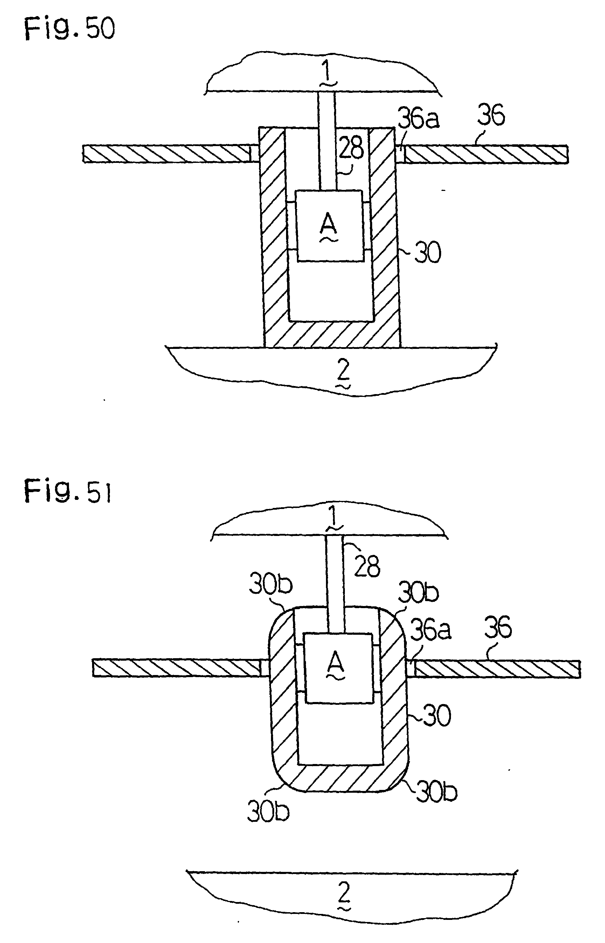

The bracket 30 may further be modified in the shape and location for ease of clearing the bracket 30 through its opening 36a. Figs. 46 and 47 illustrate the bracket 30 having rounded regions 30b or beveled regions 30c provided on the bottom thereof so that it can pass through the opening 36a of the sound insulator plate 36 with much ease for mounting the engine 1 to the anchor member 2. Figs. 46 and 49 illustrate the bracket 30 located beneath the sound insulator plate 36 at its installation position and having rounded regions 30b or beveled regions 30c provided on the top thereof so that it can pass through the opening 36a of the sound insulator plate 36 with much ease when the engine 1 is dismounted from the anchor member 2. Fig. 50 illustrates the bracket 30 having no curved region 30b nor beveled regions 30c but installed with its top projecting outwardly from the opening 36a of the sound insulator plate 35. This allows the bracket 30 to be easily lifted up and removed from the opening 36a for dismounting the engine 1. Fig. 51 illustrates the bracket 30 having curved regions 30b provided on both the top and the bottom thereof so that it can pass through the opening 36a of the sound insulator plate 36 with much ease during the mounting and dismounting of the engine 1 on the anchor member 2. The curved regions 30b may be replaced by beveled regions 30c.

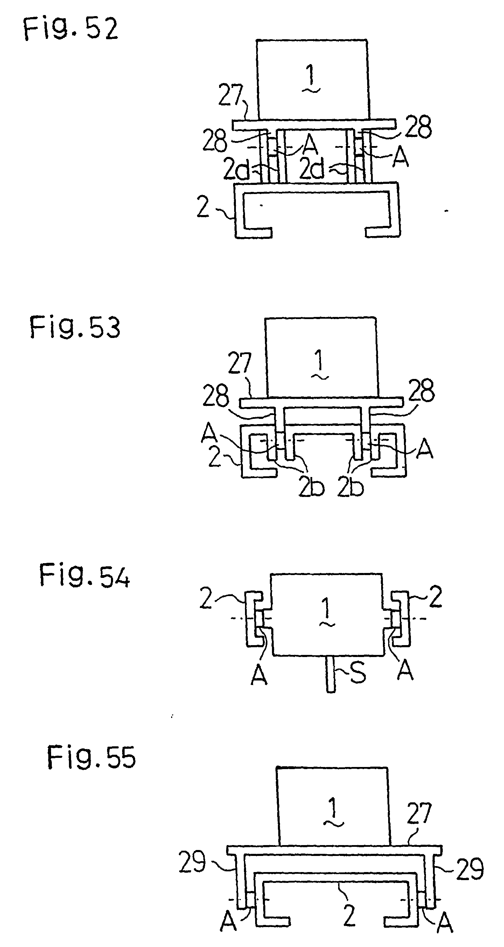

Modifications of the tubular damper A for being supported at desired positions on the anchor member 2 will be explained referring to Figs. 52 to 55.

For joining the tubular damper A to the anchor member 2, it is essential to have the location of bolts and buts easily identified and accessed. Figs. 52 and 53 illustrate (the outer tube 13 of) the tubular damper A secured to (a region inwardly of the side of the anchor member 2 of) each leg 28 which extends downwardly from a plate 27 mounted to the bottom of the engine 1. The leg 28 is inserted and supported between two leg supports 2d provided upright on the upper surface of the anchor member 2 as shown in Fig. 52 or between two leg supports 2b (substantially identical to those shown in Fig. 37) provided downwardly on the lower surface of the anchor member 2 as shown in Fig. 53 so that (the inner tube 11 of) the tubular damper is supported at both ends by the leg supports. The mounting of the legs 28 to the leg supports 2d can visibly be carried out from the outside over the anchor member 2 shown in Fig. 52 or to the leg supports 2b from the below beneath the anchor member 2 shown in Fig. 53. Fig. 54 illustrates the tubular damper A mounted to each side of the engine 1 for damper supporting the engine 1. As the tubular dampers A are supported from the outer side by two anchor members 2 respectively, they can be accessed from the outer side of the anchor members 2. Denoted by S is a vertical output shaft of the engine 1.

The engine 1 shown in Fig. 52 may be too highly elevated (along the height direction), hence impairing the compactness of the overall size. The modification shown in Fig. 53 permits the overall height of the engine 1 to be reduced but has the vertical legs 28 located inwardly from the two ends of the anchor member 2, thus making the mounting process difficult.

As compared with the arrangements shown in Figs. 52 and 53, modifications shown in Figs. 54 and 55 are improved. The modification shown in Fig. 54 reduces the overall height of the engine 1 and allows the mounting process to be carried out from the outer side of the anchor members 2. Fig. 55 shows the plate 27 mounted to the bottom of the engine 1 and arranged to extend outwardly of both sides of the engine 1. Two legs 29 are provided downwardly on the lower surface of the plate 27 at locations outwardly of both sides of the engine 1 so that the tubular dampers A are joined to the outer sides of the anchor member 2. (It is assumed hereinafter that while the legs 28 are located inwardly of both sides of the anchor member 2, the legs 29 are located outwardly of the same.) This allows the engine 1 to be reduced in the overall height and the tubular dampers A to be accessed from the outer side of the legs 29 and from the inside of the anchor member 2 via the lower opening of the anchor member 2 thus to facilitate the mounting process. Accordingly, the inner tube 11 of each tubular damper A can be accessed from both ends. Particularly, as the tubular dampers A are accessible from the outer side, their mounting to the legs 29 can favorably be made simple.

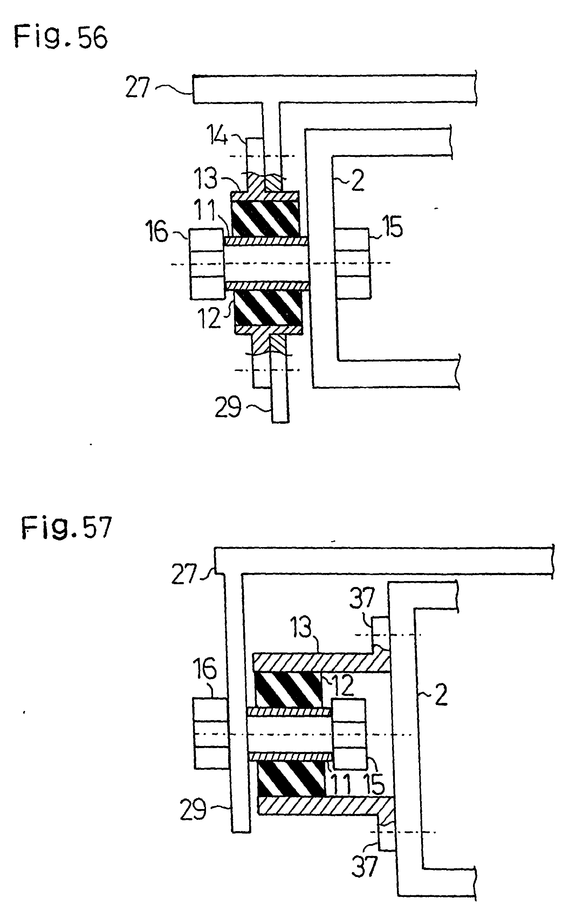

Figs. 56 and 57 illustrate details of the tubular damper A joined to the leg 28 from the outer side of the anchor member 2 shown in Fig. 55. The tubular damper A shown in Fig. 56 is similar to that shown in Figs. 15 and 16 but its outer tube 13 has a flange 14 thereof. The tubular damper A is joined to the leg 29 of the engine 1 with its outer tube 13 extending through a through hole provided in the leg 29 and its flange 14 bolted to the outer side of the leg 29. Also, the tubular damper A is joined to the anchor member 2 with the inner tube 11 tightened through with a bolt 15 and a nut 16. (The bolt 15 and the nut 16 may be reversed in the position or may be replaced by a pin 21 or bolt pin 22 and two nuts 16 threaded on both ends of the pin. The same may be applicable to the other drawings of a bolt 15 and a nut 16.) The bolt and but in the inner tube 11 can be tightened from the outer side of the leg 29 or from the inner side of the anchor member 2.

The inner tube 11 shown in Fig. 57 is preliminarily tightened to the leg 29 by a bolt 15 and a nut 16. This allows the tubular damper A to be joined to the anchor member 2 with tightening stays 37 of the outer tube 13 bolted horizontally to the side of the anchor member 2. The bolting can be carried out from the outer side of the leg 29 or from the inner side of the anchor member 2.

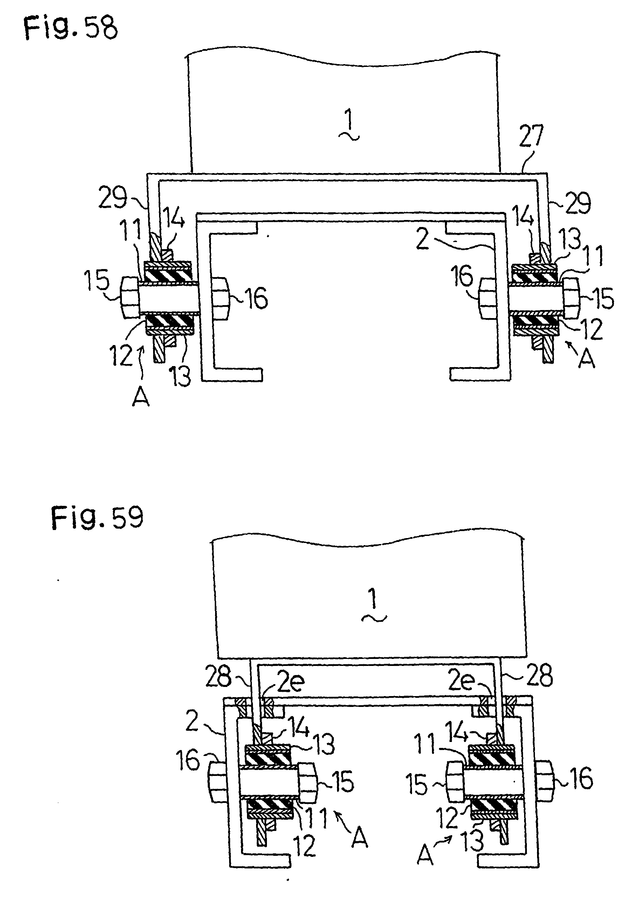

Some techniques of mounting the tubular damper A to each side of the anchor member 2 will be described referring to Figs. 58 to 63. The tubular damper A used in the techniques is provided with the flange 14 shown in Figs. 15 and 16.

Figs. 58 and 59 illustrate the tubular damper A inserted and joined to the leg 28 or 29 of the engine 1 by the flange 14 on its outer tube 13 and also joined to the anchor member 2 by its inner tube 11. While the flange 14 shown in Fig. 56 is bolted to the outer side of the leg 27, the flange 14 shown in Fig. 58 is bolted to the inner side of the leg 29. The tubular damper A joined to the engine 1 similar to that shown in Fig. 56 is tightened by a bolt 15 and a nut 16 to each side of the anchor member 2 as located on the outer side of the anchor member 2 with each leg 29 situated outwardly of the anchor member 2.

The leg 28 shown in Fig. 59 extends downwardly through an opening 2e provided in the top side of the anchor member 2 to be positioned inwardly of the side of the anchor member 2. The flange 14 similar to that shown in Fig. 58 is bolted to the inner side of the leg 28 to tighten the outer tube 13 of the tubular damper A to the leg 28. If bolted in advance, the tubular damper A will hardly pass the opening 2e from above. More specifically, as the leg 28 has been passed through the opening 2e, the inner tube 11 is tightened to the side of the anchor member 2. The leg 28 has an insertion hole provided therein for accepting the tubular damper A. After the tubular damper A is inserted into the insertion hole of the leg 28 from the inside of the leg 28, its flange 14 is bolted to the leg 28 and the inner tube 11 is tightened to the side of the anchor member 2.

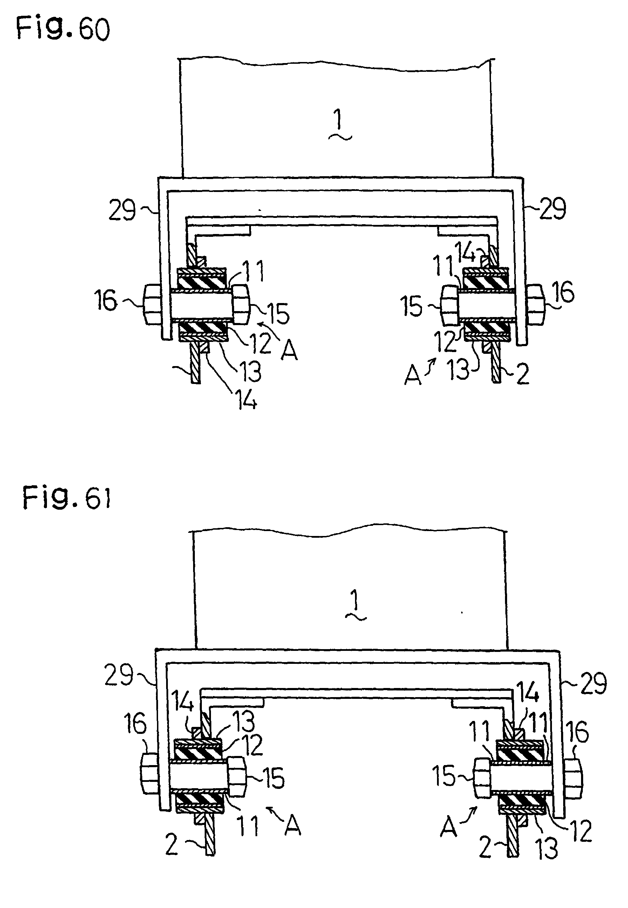

Figs. 60 to 63 illustrate the inner tube 11 tightened by a bolt 15 and a nut 16 to the leg 28 or 29 as followed by the outer tube 13 joined by the flange 14 to the anchor member 2 for installation of the engine 10. The anchor member 2 has an insertion hole provided in each side thereof for accepting the tubular damper A. The tubular damper A shown in Fig. 60 is inserted in the insertion hole from the inside of the anchor member 2 and joined to the anchor member 2 with its flange 14 bolted to the inner surface of the side of the anchor member 2. Then, the inner tube 11 is tightened by a bolt 15 and a nut 16 to the leg 29 located on the outside of the side of the anchor member 2. In brief, the tubular damper A can be joined to the leg 29 after positioned relative to the anchor member 2 (by bolting).

Similarly, the tubular member A shown in Fig. 61 is mounted between the leg 29 located on the outside of the side of the anchor member 2 and the side of the anchor member 2. The side of the anchor member 2 has an insertion hole provided therein for accepting the tubular damper A. This however allows the flange 14 to be bolted to the outer surface of the side of the anchor member 2. Accordingly, the insertion hole in the side of the anchor member 2 can accept the tubular damper A from the outside. More particularly, the tubular damper A joined by its inner tube 11 to the leg 29 is inserted from the outside into the insertion hole in the side of the anchor member 2 and tightened to the anchor member 2 by its flange 14 or outer tube 13 bolted to the side of the anchor member 2.

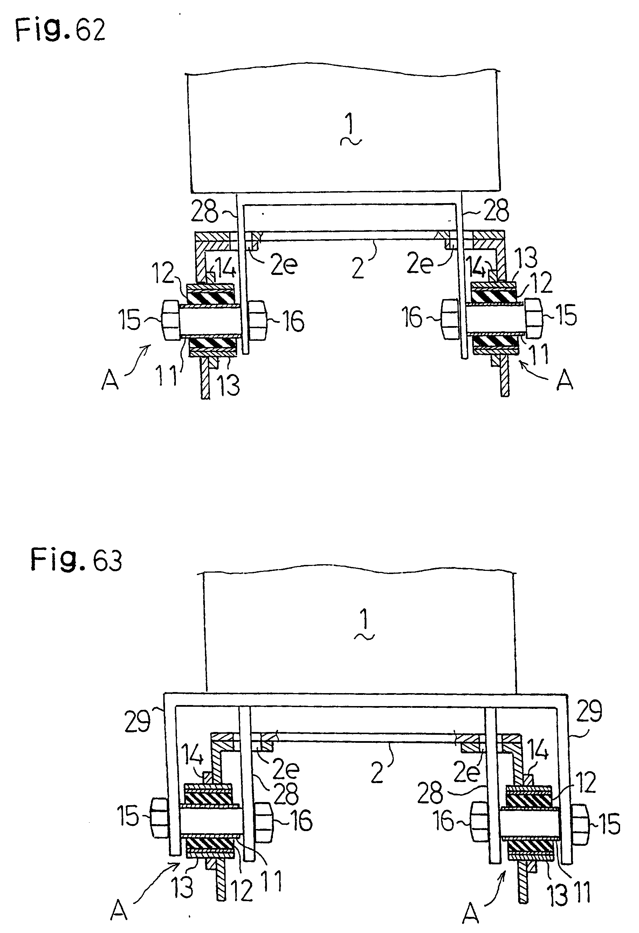

Referring to Fig. 62, the leg 28 is located inwardly from the side of the anchor member 2. The leg 28 is lifted down vertically through the opening 2e provided in the horizontal top side of the anchor member 2 before the tubular damper A is secured between the leg 28 and the side of the anchor member 2 on the outside of the leg 28. More specifically, the tubular damper A is inserted from the outside into the insertion hole of the side of the anchor member 2 and tightened to the anchor member 2 with its flange 14 bolted to the inner surface of the side of the anchor member 2 while its outer tube 14 has been joined to the side of the anchor member 2. As the legs 28 with the engine 1 held thereon are set on the inner side of the tubular dampers A, they are tightened with the corresponding inner tubes 11 by bolts 15 and buts 16.

Fig. 63 shows the legs 28 and 29 located on the inner side and the outer side of each side of the anchor member 2 respectively. More specifically, the tubular damper A is fitted into the side of the anchor member 2 with the flange 14 of its outer tube 13 tightened and then sandwiched between the two legs 28 and 29 lifted down along both ends of the side of the anchor member 2 for installation of the engine 1. Then, the inner tube 11 of the tubular damper A is tightened at both ends with the two legs 28 and 29 respectively. This allows the tubular dampers A to last longer in the long-run operation as compared with the modifications shown in Figs. 58 to 62 where the inner tube 11 is supported at one end by the side of the anchor member 2 or the leg 28 or the leg 29.

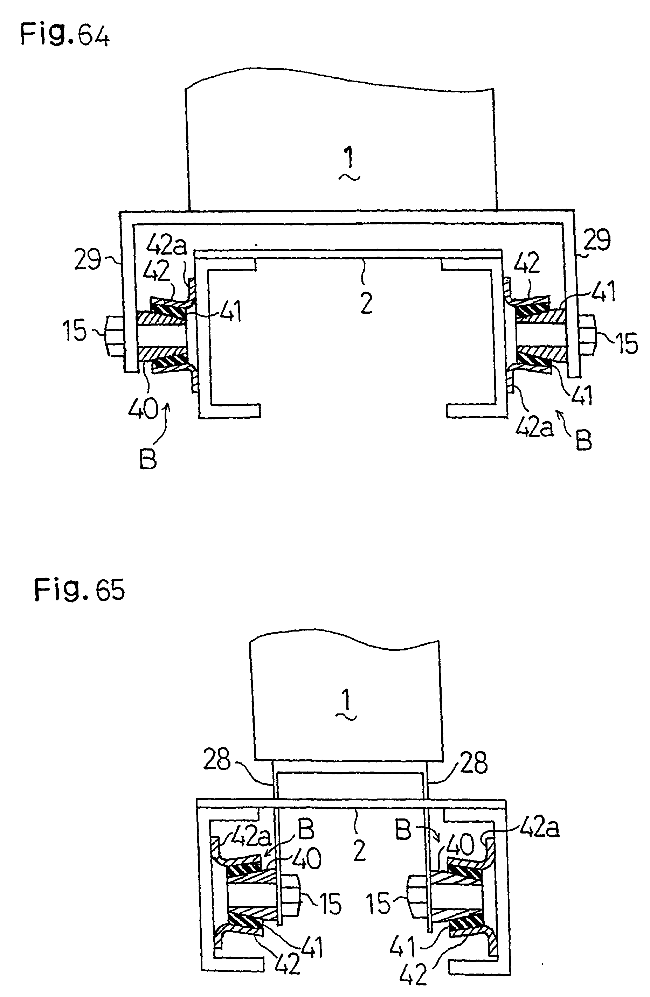

The tubular damper A disposed between the side of the anchor member 2 and the leg 28 or 29 may be modified by making the distance between the side of the anchor member 2 and the leg 28 or 29 slightly smaller than the axial length at the initial state of the elastic material of the tubular damper A. This allows the tubular damper A to be axially pre-pressurized for minimizing the elastic deformation of the tubular elastic material caused by the vibrations of the engine 1 and thus increasing the durability of the elastic material. Figs. 64 to 71 illustrate modifications where the tubular damper A is replaced by a tapered damper B having a tapered shape of the elastic material, not tubular, designed compatible with the pre-pressurization.

The tapered damper B comprises an inner tube 40 having an axial hole provided in the center thereof for accepting a bolt 15, an elastic material 41 such as rubber of a tapered shape fitted over the inner tube 40, and an outer tube 42 of a tapered shape fitted on the elastic material 41. The outer tube 42 has a flange 42a mounted on the tapered end thereof and provided with threaded holes. As the elastic material 41 has a tapered shape, it is elastically deformed to expand marginally in the radial direction when depressed along the axis of the inner tube 40, thus accepting the axial pre-pressurization.

As shown in Fig. 64 to 71, the tapered dampers B are mounted in various manners. In either case, the tapered damper B is axially pre-pressurized while the distance between the side of the anchor member 2 and the leg 28 or 29 being reduced. The inner tube 40 is tightened with a bolt 15 extending through or a combination of a bolt 15 and a nut 16 while the outer tube 42 is bolted tightened with its flange 42a bolted.

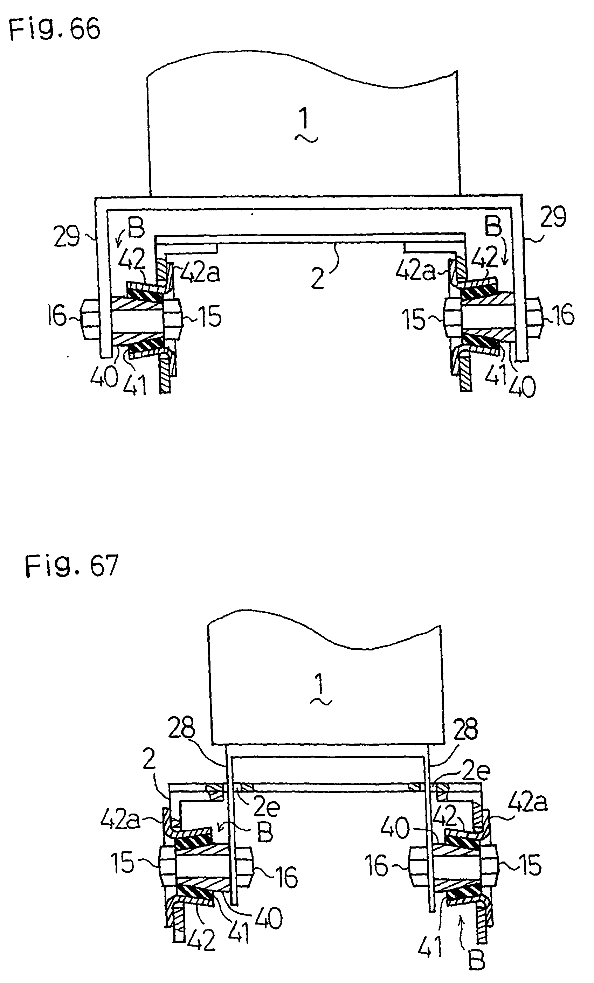

As shown in Figs. 64 to 67, the inner tube 40 is tightened to the leg 28 or 29 while the outer tube 42 is tightened to the side of the anchor member 2. Figs. 64 and 66 illustrate the leg 29 located outwardly of the side of the anchor member 2 while Figs. 65 and 67 illustrate the leg 28 located inwardly of the side of the anchor member 2. In Figs. 64 and 65, the flange 42a of the outer tube 42 is tightened at outer side directly to the side of the anchor member 2. As the flange 42a end of the inner tube 40 is not exposed, the bolt 15 is used for tightening the inner tube 40 from one side. On the other hand, the outer tube 42 shown in Figs. 66 and 67 is inserted into an insertion hole provided in the side of the anchor member 2 and its flange 42a is tightened at inner side directly to the side of the anchor member 2. As the flange 42a is free at the outer side, the inner tube 40 can be tightened at both ends with a bolt 15 and a nut 16.

The arrangement shown in Figs. 64 and 65 is now compared with that shown in Figs. 66 and 67. In Figs. 65 and 65, as the flange 42a of the outer tube 42 has been joined to the side of the anchor member 2, the leg 28 or 29 with the engine 1 is tightened to the end of the inner tube 40 opposite to the flange 42a end (with the distance between the leg 28 or 29 and the anchor member 2 set shorter than the axial length at the initial stage of the tapered damper B). It is hence necessary for axially pre-pressurizing the tapered damper B to press the leg 28 or 29 against the inner tube 40. This is followed by tightening the inner tube 40 to the leg 28 or 29 with the bolt 15. Accordingly, the pre-pressurizing and the mounting of the tapered damper B will not be an easy task.

In Figs. 66 and 67, the legs 28 or 29 are located on both sides of the side of the anchor member 2 and then the tapered damper B is fitted into the insertion hole in the side of the anchor member 2 before the inner tube 40 is tightened to the leg 28 or 29 with a bolt 15 and a nut 16. As the bolt 15 and the nut 16 are tightened, the tapered damper B is pre-pressurized axially. When the axial length of the tapered damper B is reduced, the flange 42a of its outer tube 42 comes at inner side in direct contact with the side of the anchor member 2. More particularly, the tightening of the inner tube 40 with the bolt 15 and the nut 16 can involve not only the joining of the inner tube 40 to the leg 28 or 29 but also the pre-pressurization and the jointing of the outer tube 42 to the side of the anchor member 2. Accordingly, the mounting and pre-pressurizing of the tapered damper B can readily be carried out at once.

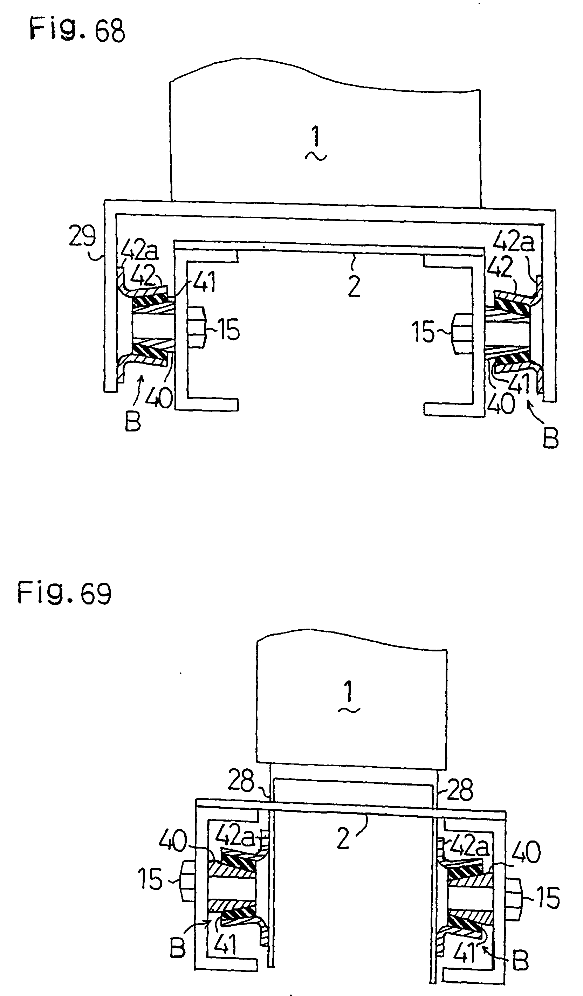

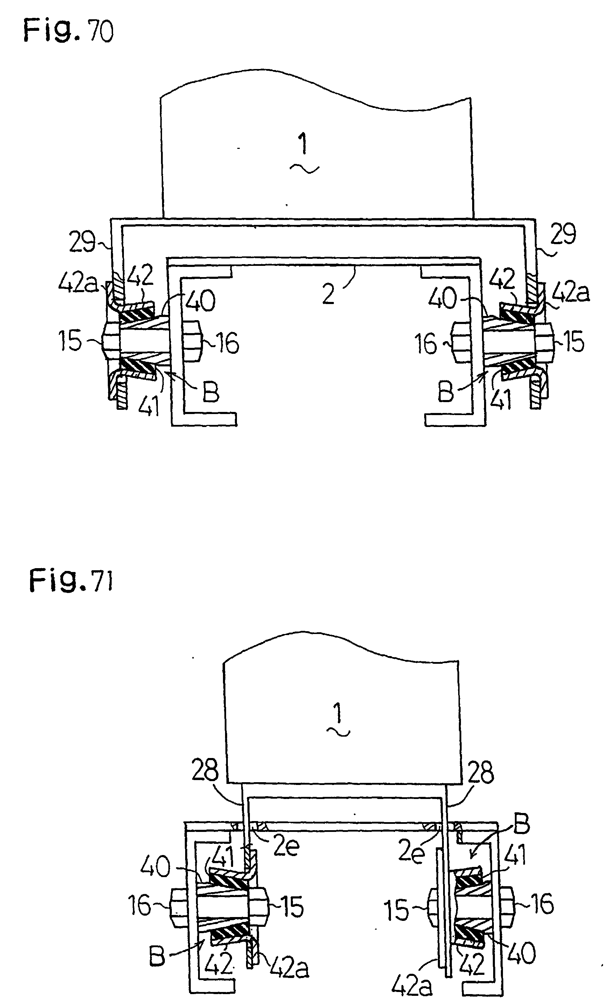

In Figs. 68 to 71, the inner tube 40 is joined to the side of the anchor member 2 while the outer tube 42 is joined to the leg 28 or 29. The leg 29 shown in Figs. 68 and 70 is tightened to the outer surface of the side of the anchor member 2 and the leg 28 shown in Figs. 69 and 71 is tightened to the inner surface of the side of the anchor member 2. Also in Figs. 68 and 69, a technique of tightening is similar to that shown in Figs. 64 and 65. As the flange 42a of the outer tube 42 has been tightened at outer side to the leg 28 or 29, the end of the inner tube 40 opposite to the flange 42a end is joined to the side of the anchor member 2 to determine the location of the leg 28 or 29 before the bolt 15 is screwed in from one side to tighten the inner tube 40 to the side of the anchor member 2. On the contrary, a technique of tightening shown in Figs. 70 and 71 is similar to that shown in Figs. 66 and 67. As the tapered damper B has been fitted into the insertion hole in the leg 28 or 29, its inner tube 40 is tightened to the side of the anchor member 2 using a bolt 15 and a nut 16. This allows the flange 42a of the outer tube 42 to be fitted and tightened at inner side directly to the leg 28 or 29 while applying a pre-pressure. Accordingly, the mounting and pre-pressurizing of the tapered damper B can be much easier than that shown in Figs. 68 and 69.

### Utility for Industrial Applications

As set forth above, the damper supporting structure for an engine of the present invention is favorable when the room for installation of an engine is small or limited in location, orientation, and posture. Particularly, it is effective for supporting the engine, of which the crank shaft is arranged in the vertical position, with a damper of an elastic material of which the spring constant is small along the horizontal.

## Claims

1. A damper supporting structure for an engine characterized by attaching a damper provided integral with the engine to an anchor member for damper supporting the engine on the anchor member.

2. A damper supporting structure for an engine characterized by attaching a damper installed partially or entirely in corresponding recesses provided integrally in the damper mounting surface of the engine to an anchor member for damper supporting the engine on the anchor member.

3. A damper supporting structure for an engine which has a crank shaft arranged in substantially a vertical position and a piston arranged for reciprocating movements on substantially a horizontal plane and is damper supported on an anchor member, characterized by a damper of which the spring constant is set small along substantially the horizontal plane and which are supported by a bracket for permitting elastic deformation, at least either the damper or the bracket joined to the engine or the anchor member in substantially a vertical position.

4. A damper supporting structure for an engine which has a crank shaft arranged in substantially a vertical position and a piston arranged for reciprocating movements on substantially a horizontal plane and is damper supported on an anchor member by a damper of which the spring constant is set small along substantially the horizontal plane, characterized in that the damper is located on the side of the anchor member.

5. A damper supporting structure for an engine which has a crank shaft arranged in substantially a vertical position and a piston arranged for reciprocating movements on substantially a horizontal plane and is damper supported on an anchor member by a damper of which the spring constant is set small along substantially the horizontal plane, characterized in that the damper has an elastic material thereof preliminarily pressed and deformed along the direction where its spring constant is set small.
